Europäisches Patentamt

European Patent Office

Office européen des brevets

(11) Publication number: **0 360 209**

**A2**

## EUROPEAN PATENT APPLICATION

(21) Application number: 89117282.7

(22) Date of filing: **19.09.89**

(51) Int. Cl.⁵: **G11B 7/135 , G11B 7/12 , G11B 7/09**

(30) Priority: **19.09.88 JP 232464/88**

(43) Date of publication of application:
**28.03.90 Bulletin 90/13**

(84) Designated Contracting States:
**DE NL**

(71) Applicant: **HITACHI, LTD.**
**6, Kanda Surugadai 4-chome**
**Chiyoda-ku Tokyo 101(JP)**

(72) Inventor: **Kando, Hidehiko**
**52-1-204, Konemoto**
**Matsudo-shi(JP)**
Inventor: **Saekusa, Shozo**
**3873-10, Shimoinayoshi Chiyodamura**
**Niihari-gun Ibaraki-ken(JP)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) Optical head and optical data processing apparatus.

(57) An optical head and an optical data processing apparatus, wherein a planar waveguide (4) is formed on a substrate (1, 2) for propagating the light emitted from a light source (3), a diffraction grating (10) is concentrically formed around a specific point of the planar waveguide on the same planar waveguide, the light diffracted by the diffraction grating is irradiated on an optical disk (100), and the light reflected from the optical disk is received by an optical detector (50, 51, 52, 53) formed on the planar waveguide. The amount of aberration is thus reduced, realizing a stable, high-performance optical system. Further, the diffraction efficiency is improved in converting the space light into the guided light by the diffraction grating, thereby improving the light utilization rate.

FIG. I

## OPTICAL HEAD AND OPTICAL DATA PROCESSING APPARATUS

### BACKGROUND OF THE INVENTION

The present invention relates to an optical head and an optical data processing apparatus adapted for performing at least selected one of writing data into and reading data from a data storage medium by an optical technique.

Conventionally, an integration has been suggested of an optical pick-up unit of an optical head of an optical data processing apparatus, such as an optical disk unit, a mgneto-optic disk unit or an optical card unit. This optical pick-up unit requires the focusing for controlling the position of condensing the light radiated on an optical medium.

The focusing is effected either by the method in which an optical head is mechanically driven to attain a focus on the surface of an optical medium or by the method in which the position of a spot for condensing a light beam emitted from an optical pick-up is electrically controlled to attain a focus on the surface of an optical medium. The former method, which has so far been widely used, requires a driving mechanism, thereby limiting the applications thereof in size reduction and integration. The latter, on the other hand, which attains the focusing electrically, is suitable for size reduction and integration.

The art of electrical focusing using a waveguide is disclosed in JP-A-60-257423. This technique, which permits a large opening, that is, a large NA (Numerical Aperture) in the direction parallel to the waveguide, poses the problem of a sufficiently large NA not obtainable along the thickness of the waveguide due to a thin outlet of the guided light.

Another conventional technique of electrical focusing is disclosed in JP-A-60-33532.

This technique, however, has the problem that the light cannot be irradiated on an optical data medium disposed outside the waveguide surface because the focus to be formed is positioned within the waveguide surface.

Still another conventional technique of electrical focusing is disclosed in JP-A-59-69732. The problem of this technique is a large amount of aberration caused when the focal length is changed.

The aforementioned prior art techniques fail to take into account holding the aberration in a small amount with a variable focal length while having a large NA, resulting in the problem of a deteriorated C N (carrier-noise ratio) with the focal length changed or increased crosstalks for an increased signal read failure.

U.S. Serial No. 301,961 filed on January 25, 1989 deals with a related technology.

### SUMMARY OF THE INVENTION

It is an object of the present invention to provide an optical head small in the amount of aberration generated with the focal length changed, that is, high in signal read (or signal write) reliability.

Another object of the present invention is to provide a reliable, compact optical head in which an optical system for changing the focal length is integrated in a hybrid with an electrical circuit for controlling the focal length.

Still another object of the present invention is to provide an optical head in which a control voltage is capable of being applied properly at the time of changing the focal length.

A further object of the present invention is to provide an optical head in which a large NA is effectively maintained by effective use of an opening of a diffraction grating for emitting light toward an optical data medium from a waveguide.

A still further object of the present invention is to provide an optical head comprising an optical system high in sensitivity for detecting a focus error signal.

A further object of the present invention is to provide an optical head comprising a three-dimensional waveguide for supplying a multiplicity of diffraction gratings stably with light from an optimum light spot.

A still further object of the present invention is to provide an optical head packaged in compact form and resistant to external dust, moisture, dirts, etc.

Still another object of the present invention is to provide an optical head suitably used with a multilayered optical data medium.

A still further object of the present invention is to provide an optical data processing apparatus compact in general configuration and high in reliability.

In order to achieve the above-mentioned objects, according to one aspect of the invention, there is provided an optical head in which the diffraction gratings are formed concentrically around a specific point on the plane waveguide.

According to another aspect of the invention, there is provided an optical head in which the specific point mentioned above coincides with a point on the plane waveguide which has the shortest optical distance from the focal point of an optical data medium.

According to still another aspect of the invention, there is provided an optical data processing apparatus including a lens of waveguide type for condensing the light emitted from a light source, in which the focal point formed in the waveguide by the waveguide-type lens coincides with the specific point.

According to a further aspect of the present invention, there is provided an optical data processing apparatus comprising a guided light absorption unit arranged adjacent to, within or in the vicinity of the plane waveguide.

According to a still further aspect of the invention, there is provided an optical data processing apparatus comprising a diffraction grating for emitting a guided light and an incident diffraction grating for a guided light outside of the waveguide, in which diffraction gratings are formed in rotational symmetry to each other with respect to a specific point.

According to a still further aspect of the invention, the grating pitches of the diffraction gratings on the different sides of the specific point are displaced by a half pitch.

According to a still another aspect of the invention, in order to realize a reliable, compact optical head, an optical substrate having the plane waveguide thereon is arranged in contact with an electrical substrate formed with an electrical circuit such as of silicon, a diffraction grating is disposed in contact with the waveguide so as to introduce the light emitted from the waveguide into an optical detector arranged in contact with the electrical substrate, a signal processing circuit is mounted on the electrical substrate, and the output of the signal processing circuit is transmitted by a conductive wiring arranged in contact with the optical substrate.

According to a further aspect of the invention, in order to optimize the distribution of a control voltage applied in changing the focal length, a translucent conductive material is arranged in contact with the plane waveguide, and a plurality of conductive wirings are arranged in contact with the translucent conductive material for applying a control voltage.

According to a further aspect of the invention, there is provided an optical head comprising at least a given voltage generator for supplying a plurality of conductive wirings.

According to a still further aspect of the invention, a conductive material is arranged in contact with the plane waveguide or in contact with the substrate carrying the plane waveguide on the side of the plane waveguide far from the translucent conductive material.

According to a further aspect of the invention, in order to increase the effective NA of the diffraction grating for emitting light, the optical head comprises a waveguide-type lens for condensing the light propagated through the waveguide and the diffraction grating progressively narrowed in width in the direction of propagation of light.

According to a still further aspect of the invention, in order to produce a focus error signal high in sensitivity, the optical head comprises a plurality of diffraction gratings of different focal lengths on the flat waveguide and a plurality of light detectors for detecting the amount of light making up the guided light in each diffraction grating.

According to still another aspect of the invention, there is provided an optical head comprising a three-dimensional waveguide as a part of the plane waveguide and a plurality of diffraction gratings for emitting a plurality of guided light rays in order to supply the light to a multiplicity of diffraction gratings from an optimum position.

According to still another aspect of the invention, in order to increase the resistance of the optical head against external dust, moisture, dirts, etc., there is provided an optical head comprising an optical system having a planar waveguide in a hollow case, a transparent window in the wavelength band of a light source at least in that part of the case where light enters and leaves, and a plurality of terminals disposed outside of the case and partially connected with the interior of the case.

According to still another aspect of the invention, there is provided an optical data processing apparatus using an optical head mentioned above to read the data recorded in an optical disk.

The above and other objects, features and advantages will be made apparent by the detailed description taken in conjunction with the accompanying drawings.

BRIEF DESCRIPTION OF THE DRAWINGS

Fig. 1 is a top plan view of an optical head according to an embodiment of the present invention.

Fig. 2 is a cross sectional view of the embodiment of an optical head shown in Fig. 1.

Fig. 3 is a diagram for explaining a coordinate system.

Fig. 4 is a diagram for explaining a focal length-changing mechanism.

Figs. 5 and 6 are diagrams for explaining the principle of tracking detection.

Fig. 7 is a diagram for explaining the focusing error detection.

Figs. 8 and 9 are diagrams for explaining a focusing error detection signal.

Fig. 10 is a diagram showing in detail a part of the embodiment of Fig. 1.

Fig. 11 is a general view of a fine tracking mechanism.

Fig. 12 is a diagram of the mechanism of Fig. 11 as viewed from top.

Fig. 13 is a diagram showing an optical data processing apparatus according to an embodiment of the present invention.

Fig. 14 is a top plan view of another embodiment of the present invention.

Fig. 15 is a hypothetical exploded view of the essential parts of an optical system presented as a perspective view.

Fig. 16 is a cross sectional view of the embodiment shown in Fig. 14.

Figs. 17 and 19 are diagrams for explaining the condition of the electric field of light in the vicinity of a focal point.

Figs. 18 and 20 are diagrams for explaining the light intensity distribution in the vicinity of the focal point.

Fig. 21 is a detailed sectional view of a plurality of diffraction gratings.

Fig. 22 is a diagram for explaining a phase regulation mechanism.

Fig. 23 is a perspective view of another embodiment of the fine tracking mechanism.

Fig. 24 is a perspective view showing the assembly condition of parts of a fine tracking mechanism according to another embodiment.

Fig. 25 shows a fine tracking mechanism according to another embodiment.

Fig. 26 is side views of a fine tracking mechanism and a rough access mechanism according to another embodiment.

Fig. 27 is a cross sectional view of an optical system of the embodiment of Fig. 26.

Fig. 28 is a top plan view of the optical head according to another embodiment of the present invention.

Fig. 29 is a cross sectional view showing the optical head of Fig. 28.

Fig. 30 is a top plan view of an optical head according to another embodiment of the present invention.

Fig. 31 is a cross sectional view of the optical head shown in Fig. 30.

Fig. 32 is a top plan view of an optical head according to still another embodiment of the present invention.

Fig. 33 is a cross sectional view of the optical head shown in Fig. 32.

Figs. 34 to 39 are diagrams showing embodiments of the optical head accordig to the present invention.

DESCRIPTION OF THE PREFERRED EMBODIMENTS

The present invention will be described in detail below with reference to the accompanying drawings.

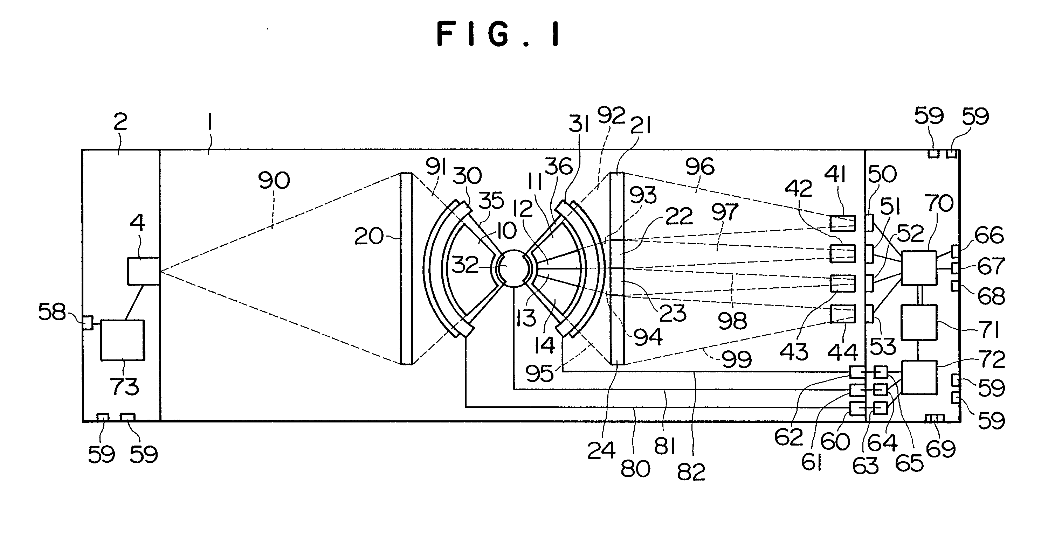

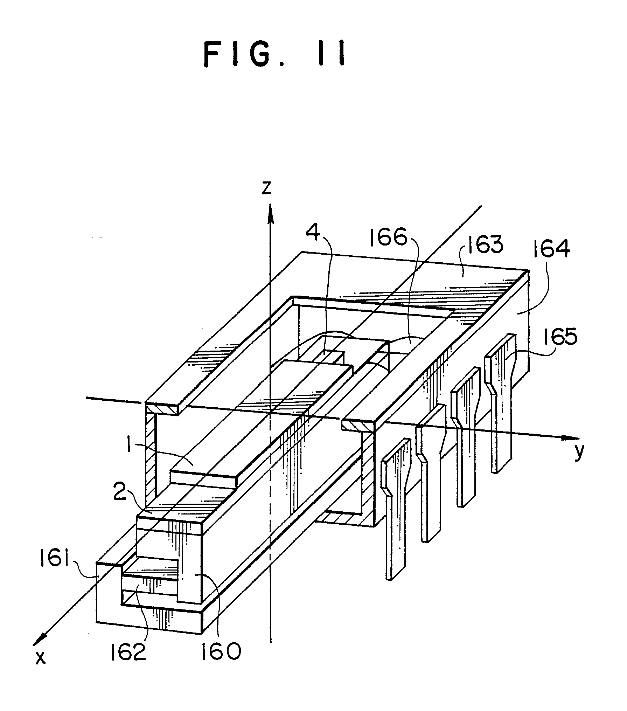

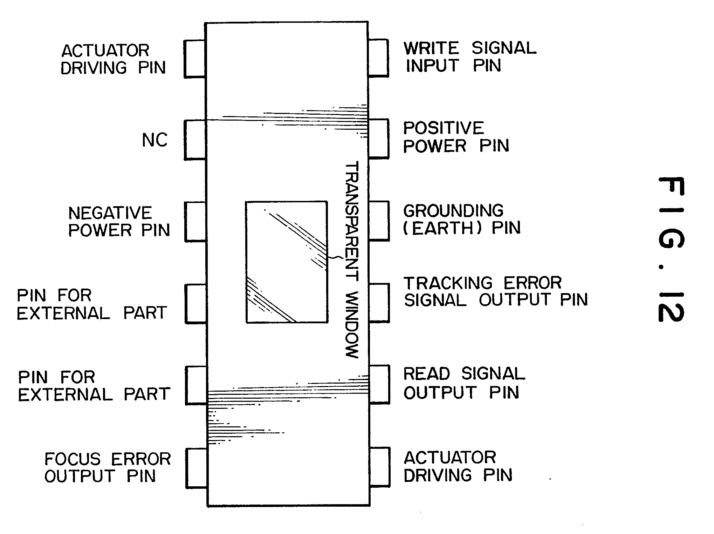

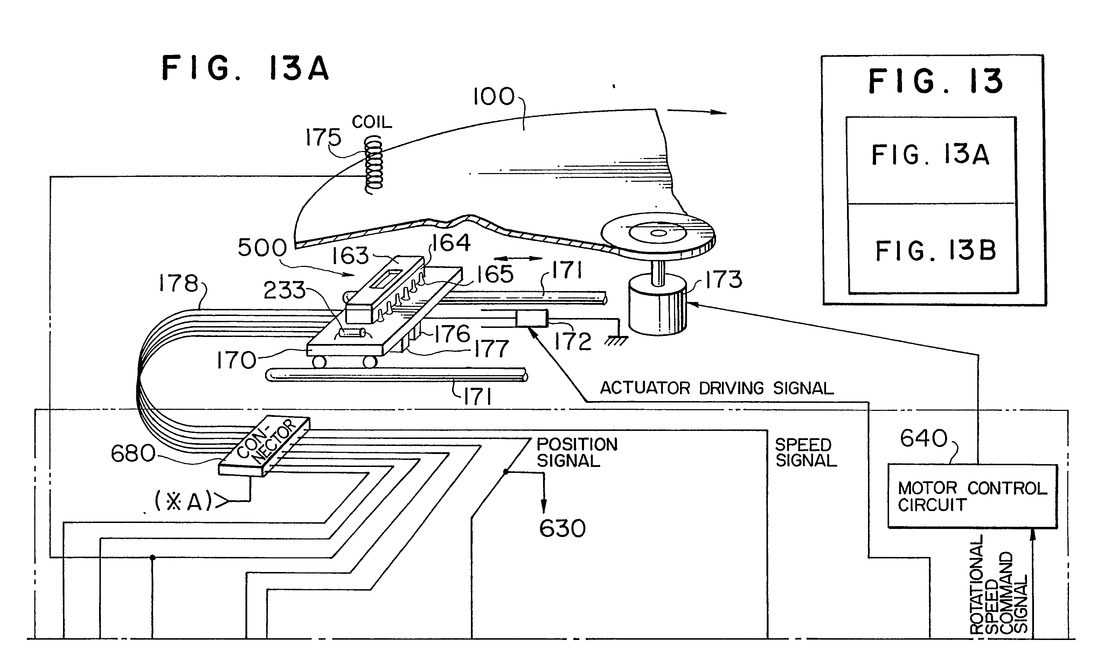

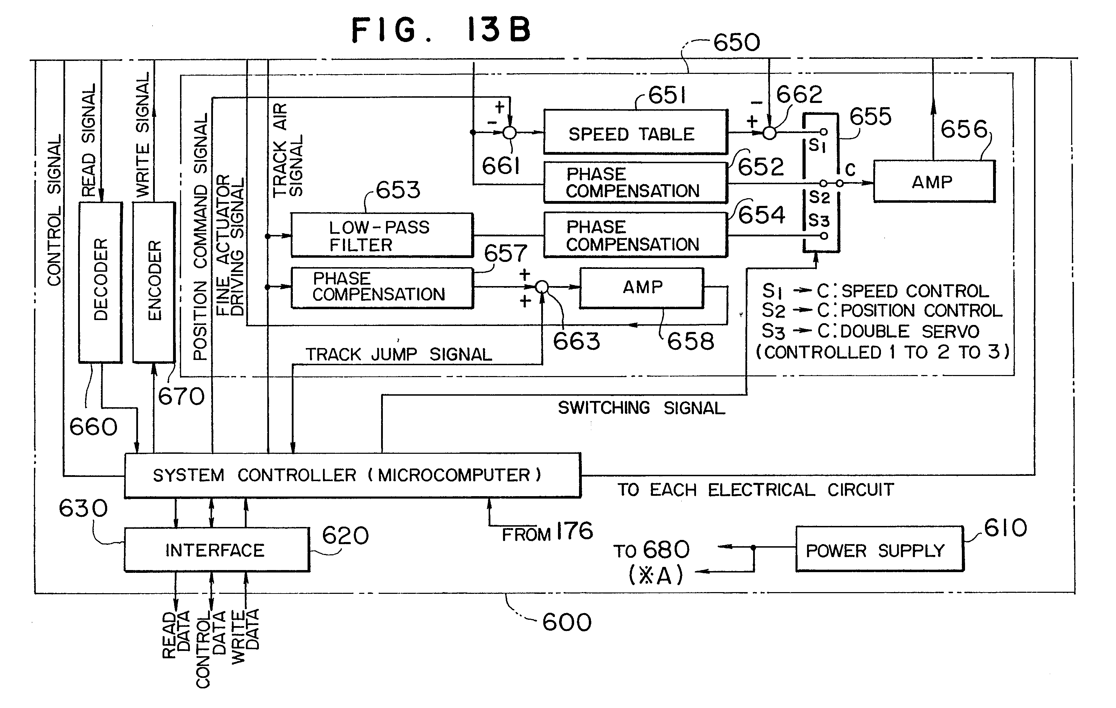

A general configuration of an optical data processing apparatus according to an embodiment of the present invention is shown in Fig. 13. A specific configuration of the essential parts of an optical head 500 used in Fig. 13 is shown in Figs. 1, 2 and 10. Further, Figs. 11 and 12 show a configuration of a fine actuator and a package of the optical head.

First, a general configuration and operation will be explained with reference to Fig. 13. An optical data medium 100 of disk type used in this example is generally called an optical disk or magneto-optic disk. The disk 100 has a multiplicity of tracks in radial direction thereof, and an optical head 500 is used for recording (writing) data in an optically readable way into each of the tracks or reading the data thus recorded. In order for the optical head 500 to write data in or read them from each track of the disk, it is necessary that the optical head 500 be moved in radial direction (along tracking direction) of the disk 100. For this purpose, the optical head 500 is supported by a support member 170 which is adapted for moving in radial direction. Specifically, the support member 170 is placed movably on guide rails 171, and together with the optical head 500 is moved by an actuator 172. To assure smooth movement, a roller bearing or the like is arranged between the support member 170 and the rails 171. Signal exchange between the optical head 500 and a control section 600 and the required power feed to the optical head 500 are effected through generally-flexible conductors 178 covered with a soft material. A motor 173 for driving the disk 100 for rotation is controlled by the control section 600. A coil 175 is used in the case where the data medium 100 is made up of a magneto-optic disk. In order to detect the position of the optical head 500 (precisely, the position thereof on the recording surface of the data medium 100 exposed to the light emitted from the optical head), a position sensor 176 is mounted on the support member 170. Also, in order to detect the feed rate of the optical head, a speed sensor 177 is mounted on the support member 170. These detection signals are applied to the control section 600 through the conductors 178. The control 600 controls the write and read of data in response to a command from an external source. More specifically, in writing data, data to be written and control data such as servo data are applied from an external unit, whereby a servo system and the optical head 500 are driven to write data in the optical data medium 100. In reading data, on the other hand, the control data is applied thereby to drive the servo system and the optical head 500, so that the data recorded in the optical data medium is produced as a read data to an external unit. The control section 600 in this embodiment includes a power supply 610, an interface 620, a system controller 630, a motor control circuit 640, a servo control circuit 650, a decoder 660, an encoder 670 and a connector 680. The power supply 610 services the power requirements of the control section as a whole on the one hand and supplies the power required for the optical head 500 on the other. The system controller 630 is realized by a microcomputer in charge of overall control to write and read data in the present embodiment. The motor control circuit 640, supplied with a rotational speed command signal from the controller 630, supplies power to the motor 173 to attain the designated speed of the motor 173. The servo control circuit 650 includes a speed table 651 for producing a speed command corresponding to a position command, a phase compensator 652, a low-pass filter 653, a phase compensator 654, a switch 655, an amplifier 656, a phase compensator 657, an amplifier 658 and adders 661 to 663. This servo control circuit 650, supplied with a position command from the system controller 630 and a present position signal from the position sensor 176, determines the difference between them by the adder 661 and applies the difference to the speed table 651. The speed table 651 applies a speed command corresponding to the difference thus determined to the adder 662. An output of the adder 662 is applied to the amplifier 656 through the switch 655 which first connects S1 and C. The actuator 172 is driven by an output of the amplifier 656. The servo control circuit 650, in order to switch from speed control to position control when the optical head 500 approaches a target position (target track), turns over the contact of the switch 655 from S1 to S2 to connect S2 and C in response to a switching signal from the system controller 630. As a result, the optical head 500 is placed in position on the target track of the medium 100. This control is called the normal seek control. Upon completion of positioning on the target track, a switching signal causes the contact of the switch 655 to be switched from S2 to S3 thereby to connect S3 and C. Thus, the servo control circuit 650, supplied with a track error signal detected in the optical head 500 as described later, effects the tracking control to eliminate the particular error. According to the present embodiment, the control operations are either by the actuator 172 or the fine tracking control by the fine actuator. In the control operation effected by driving the actuator 172, the high-frequency component is removed by the low-pass filter 653, and thus the control operation is performed through the phase compensator 654, the switch 655 and the amplifier 656. The control operation by driving the fine actuator (described later) within the optical head 500, on the other hand, is executed by forming a driving signal by the adder 663 and the amplifier 658 and supplying this signal to the optical head 500 through the connector 680 and the conductor 178. In this way, the tracking control is effected in two stages by the actuator 172 and the actuator 162 (described later) in the optical head.

When the light from the optical head 500 is placed in position at predetermined track of the medium 100 or more specifically at the central part thereof, data begins to be written or read. In reading data, the optical head 500 reads and the data thus read is applied to the control section 600 in response to a command from the control section 600. The control section 600 decodes the data by the decoder 660, and the system controller 630 applies the decoded data (read data) to an external position through the interface 620. In writing data, by contrast, the control section 600 encodes the data to be written by the encoder 670 and supplies the encoded data to the optical head 500. As a result, the optical head 500 records the particular data in the medium 100. The method of recording data is of various types. For example, they include (1) a method in which data encoded is recorded by the intensity of light quantity irradiated on an optical data medium (in which case, neither the coil 175 nor the branch 179 is required), (2) a method in which the encoded data is recorded by the direction or intensity of a magnetic field generated in the coil 175 and applied to the part of the optical data medium radiated with a predetermined light quantity (in which case, the light quantity is constant and a semiconductor laser in Fig. 1 maintains a constant light quantity regardless of the write signal), and (3) a method in which a predetermined magnetic field is applied in advance to the recording part by the coil 175 or a permanent magnet and data is recorded by the light quantity irradiated on the recording part.

Although the present embodiment is configured in such a manner as to enable read and write, a read-only or a write-only configuration is made possible by eliminating some parts.

According to the present embodiment, all the components including the optical system, fine tracking mechanism, focusing mechanism and the control circuits therefore are housed in a single compact package, and therefore the apparatus size is reduced with an external optical system eliminated and with lesser external electrical circuits, thereby realizing an optical pick-up configuration high in reliability.

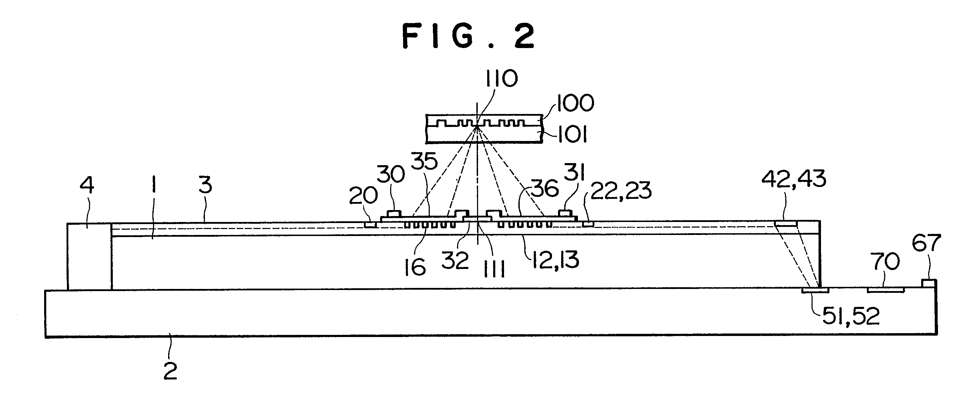

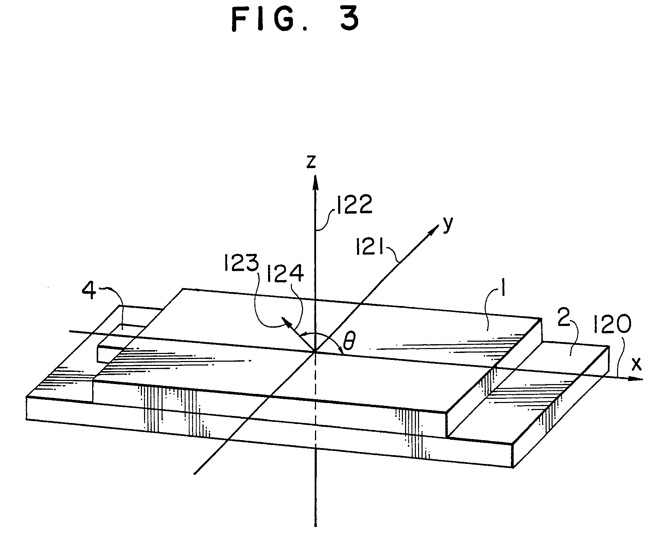

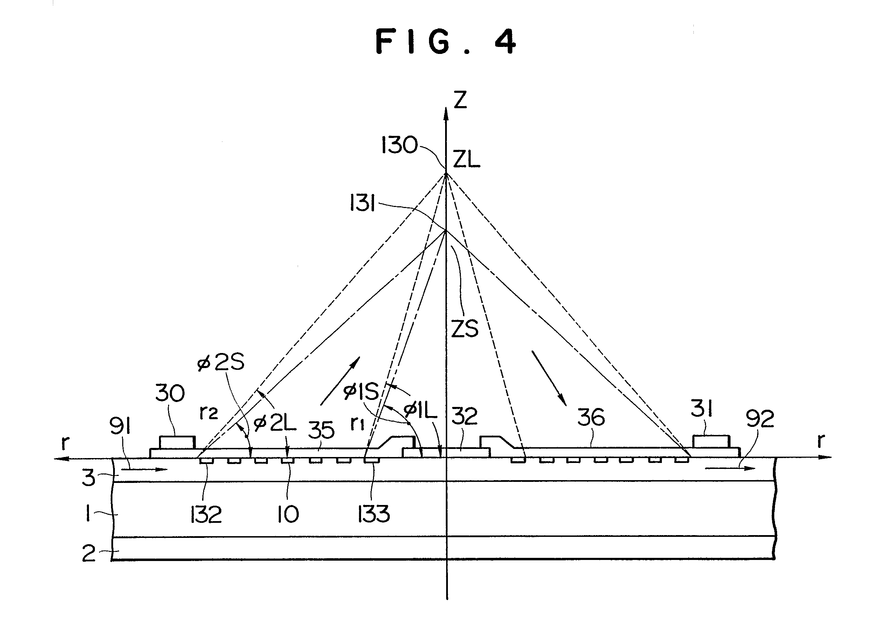

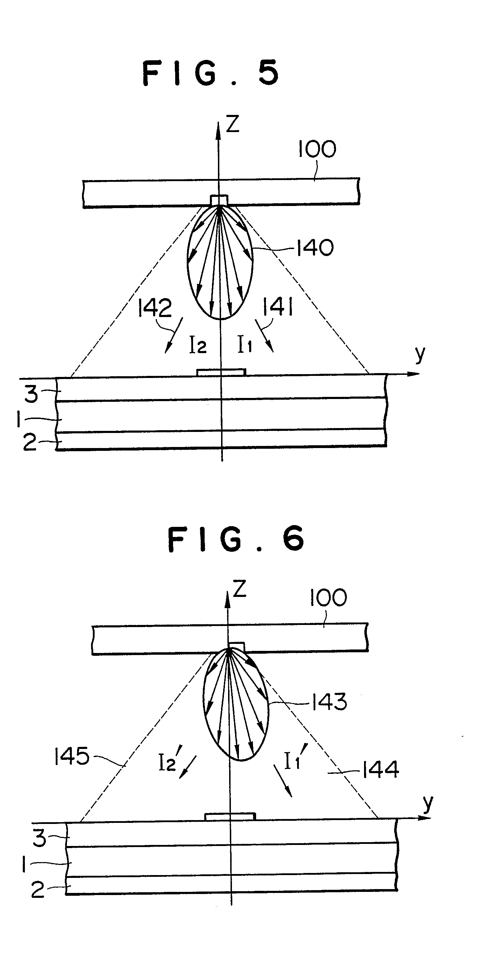

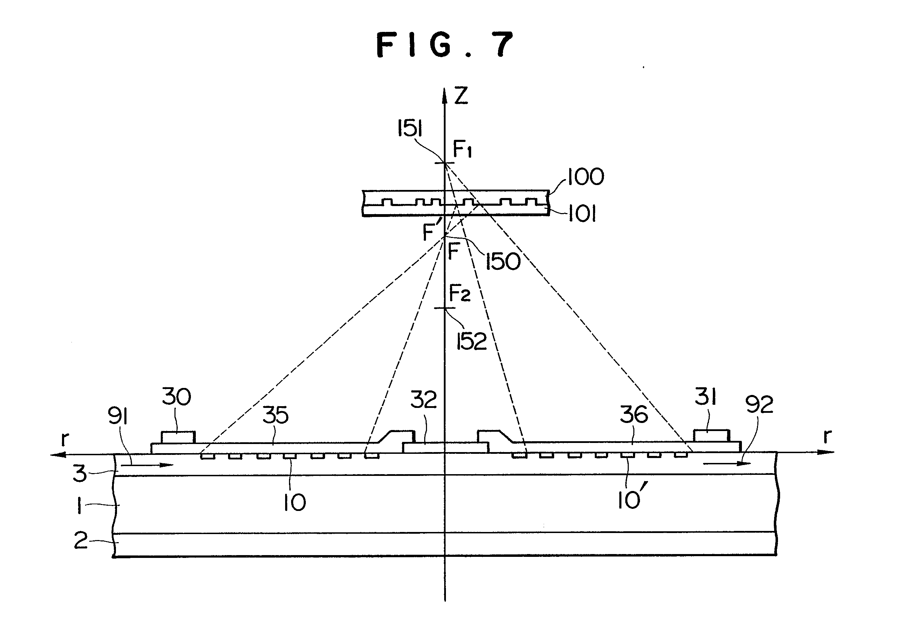

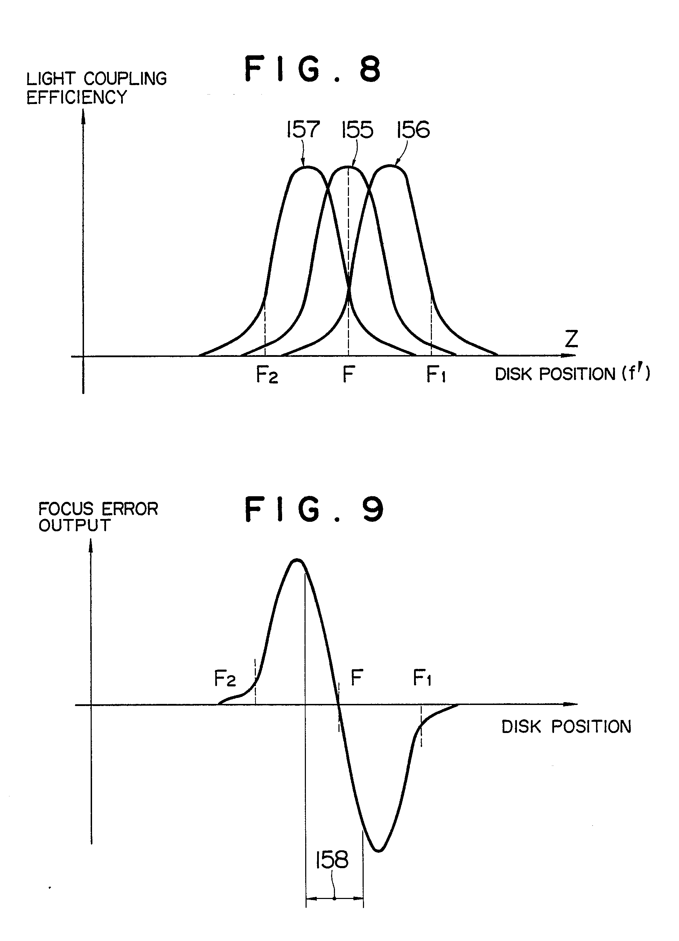

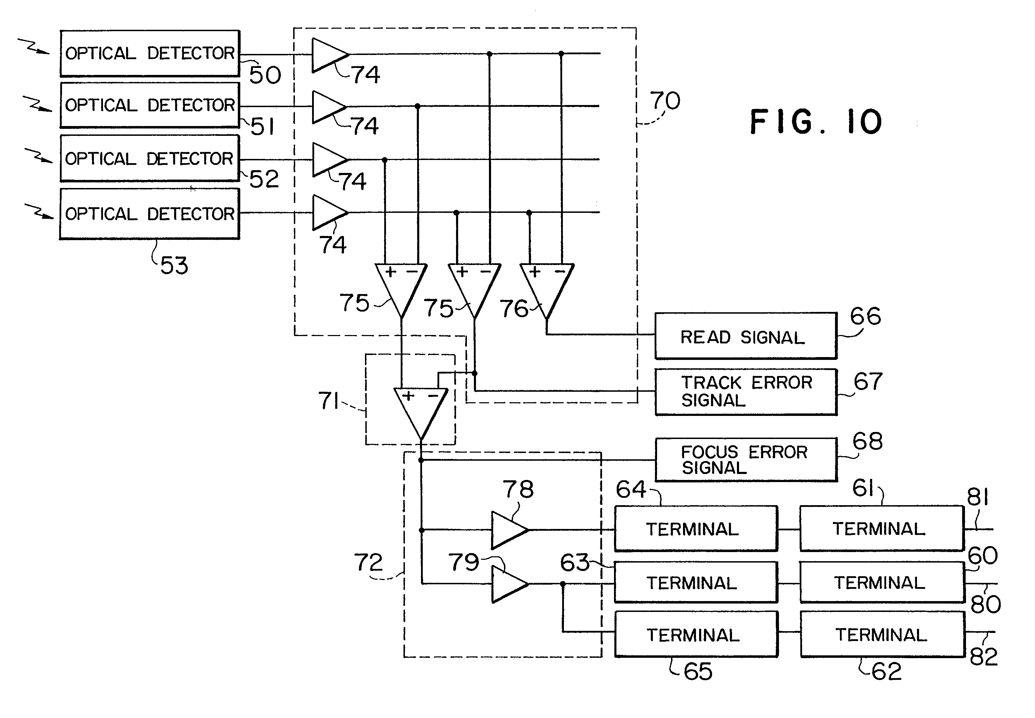

Now, the optical head 500 used in the present embodiment will be explained in detail with reference to Figs. 1 to 12. Figs. 1 and 2 show a plan view and a cross sectional view respectively of the essential parts of the optical head. Fig. 3 is a diagram for explaining the coordinate system, Fig. 4 is a diagram for explaining a focal length changing mechanism, Figs. 5 and 6 are diagrams for explaining the principle of tracking detection, Fig. 7 is a diagram for exaplaining the focusing error detection, Figs. 8 and 9 are diagrams for explaining a focusing error detection signal, Fig. 10 is a schematic diagram showing a fine tracking mechanism, and Fig. 11 is a schematic diagram showing a rough access mechanism.

First, the general operating condition of the present embodiment will be explained with reference to Figs. 1 and 2. An optical substrate 2 is arranged in contact with an electrical substrate 2. The electrical substrate 2 is one capable of making up an electrical circuit and is made of such material as silicon or gallium arsenide. The optical substrate 1, on the other hand, makes up a substrate for constructing a waveguide 3. This is conceptually defined as a substrate in "Hikari Shuseki Kairo (Optical Integrated Circuits)" by Hiroshi Nishihara, et al. page 1, Ohm Publication, 1985. Specifically, the material of this device is illustratively described in "Hikari Shuseki Kairo (Optical Integrated Circuits)" by Hiroshi Nishihara, et al., page 177, published 1985 by Ohm Publication. This optical substrate has arranged in contact therewith a waveguide 3 having an electro-optic effect. A material having an electro-optic effect which is usable alternatively is also described in "Sensor Gijutsu (Sensor Technologies)", p.p. 45 to 47, Vol. 7, No. 5, 1987 and "Petrotec", p.p. 25 to 31, Vol. 10, No. 11, 1987. Various other materials are also conceivable. The electrical substrate and the waveguide may be fabricated as a monolithic on the same substrate as described in "Journal of Lightwave Technology", p.p. 913 to 918, LT Vol. 4, No. 7, 1986. In that case, a single substrate is used for an optical substrate and an electrical substrate at the same time.

The light emitted from the semiconductor laser 4 driven by the driving circuit 73 on the electrical substrate 2 becomes a light beam 90 propagating through the waveguide 3. The intensity of the light beam from the semiconductor laser 4 at the time of reading the signal is different from that at the time of writing (recording) the signal. The light intensity is controlled by applying a read or write signal designated from an external source from the terminal 58 and by adjusting the light quantity of the semiconductor laser 4 through the driving circuit 73. The driving circuit 73, which is mounted on the substrate in the case under consideration, may alternatively be arranged as an independent external unit. The optical head used for read-only operation not necessarily requires this control.

The light 90 advances while being widened in the waveguide 3, and is condensed by being deflected in the waveguide-type lens 20. In the process of condensation, the diffraction grafting 10 for light irradiation acts to emit the light from the waveguide 3 and directs the light to the optical data medium 100. The light is thus focused at the focal point 110 on the optical data medium 100 arranged in contact with a protective film 101. The light reflected from the optical data medium 100 is transformed into light rays 92, 93, 94, 95 propagating through the waveguide 3 by the function of diffraction gratings 11, 12, 13, 14. The style of each of the diffraction gratings 10, 11, 12, 13, 14 will be described later. The light rays 92, 93, 94, 95 propagating through the waveguide 3 are condensed by the functions of the waveguide-type lenses 21, 22, 23, 24 respectively. These light rays enter optical detectors 50, 51, 52, 53 on the electrical substrate 2 through the diffraction gratings 41, 42, 43, 44 respectively and are transformed into electrical signals. Each electrical signal is amplified and processed by an electrical processing circuit 70 on the electrical substrate 2. Of all these outputs, a read signal is applied through a terminal 66, and a tracking error signal applied through a terminal 67, to an external signal processing circuit not shown. The computation circuit 71 connected to the electrical processing circuit 70 is for generating a focus error signal which is applied to an external signal processing circuit through the terminal 68 as required on the one hand and to the output circuit 72 of the control voltage on the other. The output circuit 72 is for generating a voltage for driving the terminals 30, 31, 32 in accordance with the focus error signal thus obtained, and the output of the output circuit 72 is applied through the terminals 63, 64, 65 on the electrical substrate, the terminals 60, 61, 62 on the waveguide which are coupled by the wiring, and the conductors 80, 81, 82 on the electrical substrate, to the terminals 30, 31, 32. In the case where the terminals 30 and 31 are impressed with the same control voltage, the terminals 63, 60, and the conductor 80 may be done without by electrically coupling these elements on the optical substrate, thereby simplifying the configuration. In the case where the same control voltage is applied to the electrodes 30, 31, 32, the configuration may be simplified further by coupling all the components electrically on the optical substrate and thus by eliminating the terminals. The electrodes 30 and 32, and the electrodes 31 and 32 are connected by objects (called translucent objects) 35 and 36 having a translucent characteristic at least in the wave length band of the light used. Each of these objects is a resistive one (an object indicating a resistance value intermediate a good conductor and an insulting material). The ground level of the output circuit 72 for generating a given voltage is considered equivalent to the substrate, and the voltage generated here is applied between the translucent material 35 and the electrical substrate 2 by way of the above-mentioned route between the translucent material 36 and the electrical substrate 2. The electrodes 30 and 31, which may alternatively be integrated with each other by use of a material equivalent to the translucent materials 35, 36, is made up in the manner mentioned below in the case of using a good conductive material such as aluminum. Specifically, the electrode 30 is arranged on the translucent material 35. By doing so, the translucent material 35 becomes a buffer layer making it possible to propagate the guided light 91 efficiently without absorption. For similar reasons, the terminal 31 is also arranged on the translucent material 36. The terminal 32 is arranged in contact with the waveguide 3. This is in order to absorb the unrequired guided light which has not been diffracted in the diffraction grating 10 of all the guided light 91. This process makes it possible to prevent the unrequired guided light from being superimposed on the guided light 92, thereby improving the quality of the electrical signal detected by the optical detectors 50 to 53. Also, a power supply for driving the electrical circuit on the substrate is connected through the terminal 69. In accordance with the requirement of circuit configuration, an external resistor, a capacitor, a coil, a semiconductor or other electrical elements are connected through the terminal 59. These terminals are not required if external parts are not necessary.

Now, the coordinate system used in the description below will be explained with reference to Fig. 3. Fig. 3 includes the electrical substrate 2, the optical substrate 1, and the semiconductor laser 4 shown in Fig. 1, details of which are the same as those in Fig. 1. An x-axis 120, a y-axis 121 and a z-axis 122 perpendicular to each other are plotted. The x-axis 120 and y-axis 121 are designed so that the plane formed by them may coincide with the surface plane of the waveguide 3 in Fig. 1, and the x-axis 120 is designed to pass through the light-emitting point of the semiconductor laser 4. The z-axis 122, on the other hand, is plotted to pass the focal point 110 of the optical data medium 100, and these three axes including x-axis 120, y-axis 121 and z-axis 122 are assumed to intersect at a point. This intersection is called the origin. When a cylindrical coordinate system is used, a point 123 is conceived on the x-y plane, the distance between the origin and the point 123 is considered r, and the straight line 124 connecting the point 123 and the origin is assumed to intersect with the x-axis at an angle of $\theta$.

In the case where an electrical field is applied in the direction of z-axis as in the case of Fig. 1, the z-axis is preferably set in such a direction that a high electro-optic effect is obtained of the material of the optical substrate 1. When using lithium niobate is used for the substrate, for instance, a Z-cut substrate is should be used together with a TM-mode light.

Now, explanation will be made about a sectional view containing the z-axis according to this embodiment with reference to Fig. 4. A guided light 91 propagated through the waveguide 3 and directed toward the origin is emitted outside of the waveguide by the action of the diffraction grating 10. By changing the angle of emission outside of the waveguide, the focal point is changed thereby to realize a focal length-changing mechanism free of moving parts.

A method of changing the emission angle is either by changing the equivalent refractive index of the waveguide or by changing the wavelength of the light propagating through the waveguide. The former utilizes the electro-optic effect, thermo-optic effect, magneto- optic effect, optical damage, acousto-optic effect, piezoelectric effect, etc. to change the refractive index at or in the vicinity of the waveguide. The latter takes advantage of a laser of changeable wavelength. These methods of controlling the light are briefly described in "Optical Integrated Circuits" p.p. 104 to 143, by Hiroshi Nishhara, et al., 1985, mentioned above. It is assumed that the electro-optic effect is used according to the present embodiment.

Assume that a standard condition in which a specific voltage is applied to the electrodes 30, 31 and 32 or no voltage is applied thereto at all. Under this condition, the distributin of the grating pitch in the direction r of the diffraction grating 10 is determined in such a way as to form a focal point at 130 where $z = f_L$ on the z-axis. Specifically, the light beam that is emitted at an emission angle of $\emptyset 2L$ from the point 132 of r = r2 on the x-y plane passes through the point 130, and at the same time the light emitted at an emission angle of $\emptyset 1L$ from the point 133 of r = r1 on the x-y plane also passes through the point 130. (To facilitate the understanding, only two cases involving r = r1 and r = r2 will be explained). When a voltage different from the standard voltage is applied to the electrodes 30 and 31, an electric field different from the standard condition is generated in the space with the electrical substrate 2 through the translucent material 35, and the refracive index of the waveguide or the optical substrate 1 in contact with the waveguide is changed by the electro-optic effect, thereby changing the equivalent refractive index of the waveguide. As a result, the light emission angle is changed, and at r = r2, the emission angle changes from $\emptyset 2L$ to $\emptyset 2S$, so that the point where the emitted light crosses the z-axis changes from the point 130 of z = zL to the point 131 of z = zS. When r = r1, on the other hand, the emission angle changes from ⌀1L to ⌀1S, and the point where the emitted light intersects the z-axis is changed from the point 130 of z = zL to the point 131 of z = zS (or the vicinity thereof). This operation enables the focal length to change from ZL to ZS by the electrical functions.

The voltages applied to the electrodes 30 and 32 may be equal to each other. In that case, the computation circuit 71 and the output circuit 72 in Fig. 1 may be simplified. Apart from this, different voltages may be applied to the electrodes 30 and 32 from each other. In that case, the voltages are distributed in the direction r thereby to produce a distribution of the equivalent refractive index in the direction r by the functions of the translucent materials 35, 36 having the electrical resistance. As a result, the phase matching at the focal point 131 (ZS) other than under standard status is further improved for a reduced aberration. Further, it is possible to improve the phase matching at the focal point with the focal length changed by disposing the translucent material 35 with different thicknesses or widths along the direction r or by changing the thickness of the waveguide layer 3 or the optical substrate 1 along the direction r and thus by finely regulating the distribution of the electric field along the direction r.

The light rays reflected from the optical data medium at the focal point 130 or 131 are coupled at the waveguide by a function similar to the emission and, propagating through the waveguide, are transformed into a waveguide light 92 proceeding farther from the origin.

An arrangement is made to make sure that the above-mentioned functions are established regardless of the direction θ in Fig. 3. More specifically, as shown in Fig. 1, the electrodes 30, 31, 32 and the diffraction grating 10 are mounted in concentric form around the origin. Further, the distribution of the pitches of the concentric diffraction grating along the radial direction is designed to form a focal point at z = fL under the standard conditions. This process assures that the light emitted from any part of the diffraction grating always crosses the z-axis regardless of whether a control voltage is applied thereto or not, thereby forming a focal point by phase matching with the light emitted from other parts at the crossing point. In other words, at least the aberrations asymmetric with respect to an axis such as comatic aberration are greatly reduced. Further, aberrations symmetric with respect to an axis may also be reduced depending on the method of application of a control voltage. In this way, a focal spot satisfactory only with a small aberration is formed even when the focal length is changed.

Explanation of the diffraction grating 10 was made above with reference to a slit formed in the waveguide 3. A similar effect is obtained, however, by a loading type, refractive index distribution type or the like. A diffraction grating of refractive index distribution type, in particular, which is free of the unevennesses at the parts thereof carrying the translucent materials 35, 36 in Fig. 1, has an improved style of distribution of the electric field applied thereto. This is also the case with the diffraction gratings 11, 12, 13, 14 in Fig. 1.

There is no special limitation imposed on the style of the region where the diffraction grating 10 for emitting the light exists, that is, the opening of the diffraction grating 10 in Fig. 1, as long as the part for passing the guided light 91 in Fig. 1 is included therein. As to the diffraction gratings entered by the light, that is, the diffraction gratings 11, 12, 13, 14 in Fig. 1, by contrast, the light reflected from the optical data medium is capable of being effectively transformed into a guided light for an improved utility of the light if the whole regions of the diffraction gratings are set at a position in rotational symmetry with or containing the region of the diffraction grating 10.

Now, the principle of signal reading will be explained with reference to Fig. 5, which shows a y-z sectional view in the vicinity of the focal point. When the right tracking is being secured, the distribution of the light reflected from the optical data medium 100 is symmetric with respect to the z-axis. If the light 141 advancing in the direction satisfying y > 0 and the light 142 advancing in the direction satisfying y < 0 are detected by different optical detectors, the light quantities $I_1$ and $I_2$ detected by the two detectors are equal to each other. More specifically, the light quantity entering the diffraction grating 11 and detected by the optical detector 50 in Fig. 1 is equal to that entering the diffraction grating 14 and detected by the optical detector 53. The quantity of the reflected light depends on the recording of the optical data medium at the focal point, the light quantity of a light source being constant. Therefore, the light quantity entering the diffraction grating 11 in Fig. 1 and detected by the optical detector 50 plus the light quantity entering the diffraction grating 14 and detected by the optical detector 53 is used as a read signal to read the data from the optical data medium. In the case where the light quantity of the light source is liable to fluctuate, an optical detector for detecting the light quantity of the light source is added and the result of detection threat is used for normalization, thus producing a read signal free of the variation in the light quantity of the light source. As an alternative method, the light quantity of the light source may be regulated to a constant level.

Now, the principle of the tracking detection will be explained with reference to Fig. 6. When the tracking develops an error, the recording portion of the optical data medium does not exist on the z-axis, and therefore the light quantity distribution 143 of the reflected light is not symmetric with respect to z-axis, with the result that the quantity $I'_1$ of the light 144 received with y > 0 is not equal to the quantity $I'_2$ of the light 145 received with y < 0. More specifically, the light quantity entering the diffraction grating 11 in Fig. 1 and detected by the optical detector 50 is not equal to that entering the diffraction grating 14 and detected by the optical detector 53. Thus the difference is taken between the outputs of the optical detectors 50 and 53 to produce a tracking error signal.

The principle of focus error signal detection will be explained with reference to Figs. 7, 8 and 9. The light 91 proceeding through the waveguide 3 emits out of the waveguide by the function of the diffraction grating 10. In the process, assume that the light is condensed at a focal point 150 determined as z = F by the voltages applied to the electrodes 30, 32 and the translucent material 35. Also assuming that the data surface of the optical data medium 100 protected by a protective film 101 is not at the focal point 150, that is, z = F, but at a position represented by z = F', the reflected light assumes the same behavior as if emitted from the point of z = $F_1$. In the case where the distribution in the direction r of the pitches of the diffraction grating 10' entered by the reflected light is equivalent to that of the diffraction grating 10 under the same voltage application, the relationship as shown by a hill-like curve 155 with a peak at z = F in Fig. 8 holds between the position of the optical data medium surface (value of F') and the optical coupling efficiency for converting the reflected light into the guided light 92 at the incident diffraction grating 10'. It is thus possible to determine the displacement of the focal point in the optical data medium surface by measuring the light quantity of the guided light 92 or the same quantity normalized by the light of quantity emitted from the light source. In the principle of detection mentioned above, the positive or negative direction of displacement is determined in the manner that will be mentioned. Specifically, a region of the diffraction grating is arranged with the pitches thereof determined in such a way as to couple most efficiently the light rays emitted from the point indicated by z = $F_1$ ($F_1$ > F). This is equivalent to the diffraction grating 12 in Fig. 1. The optical coupling efficiency of this diffraction grating is shown by a curve 156 in Fig. 8. In order to couple most efficiently the light rays emitted from the point z = $F_2$ ($F_2$ > F), on the other hand, a region of the diffraction grating is arranged with pitches thereof appropriately determined. This is equivalent to the diffraction grating 13 in Fig. 1. The optical coupling efficiency of this diffraction grating is shown by a curve 157 in Fig. 8. In Fig. 1, the difference between the output of the optical detector 52 for detecting the light entering the diffraction grating 12 and that of the optical detector for detecting the light entering the diffraction grating 13 is given by the curve shown in Fig. 9, thus making it possible to detect a focus error correctly within the detection range 158.

If the voltage applied to the electrode 30 is rendered equal to that applied to the electrode 31, the relationship $F_1$ > F > $F_2$ remain unchanged even if the focal length is changed with the applied voltage, and therefore the focus error signal is detected always correctly.

In the aforementioned embodiment, in order to set the focal length of the diffraction grating 11 in Fig. 1 to $F_1$ in Fig. 7 and the focal length of the diffraction grating 12 in Fig. 1 to $F_2$ in Fig. 7, the pitches of the diffraction gratings 11 and 12 are adjusted in design stage. As an alternative, however, all the diffraction gratings 10 to 14 may have the same pitch in Fig. 1. This is attained by separating the electrode 31 and the translucent material 36 in the regions of the diffraction gratins 10 to 14 in Fig. 1, and by applying an equal voltage in the region of the diffraction gratings 11, 14, a lower voltage in the region of the diffraction grating 12, and a higher voltage in the region of the diffraction grating 13.

In the foregoing description, the focal length of the diffraction grating 12 in Fig. 1 is set to $F_1$, and that of the diffraction grating 13 to $F_2$ while holding the relationship of $F_1$ > F > $F_2$. Instead, a focus error signal may be detected by the same function if the relationship is changed to hold $F_1$ < F < $F_2$.

In the case where such a focus error signal detection system as mentioned above is employed, it is likely that a tracking error signal may be superimposed on the focus error signal. Specifically, the diffraction grating 12 in Fig. 1 is located in the region represented by y > 0, and the diffraction grating 13 in the region given by y < 0 for detecting the difference of the incident light rays. This is a configuration equivalent to the tracking error detection system explained with reference to Figs. 5 and 6. In this way, a real focus error signal is superimposed on a tracking error signal, and only appearent tracking error signals shown in Figs. 5 and 6 are detected. It is thus possible to determine a real focus error signal by reducing the tracking error signal at a predetermined rate from the focus error signal explained above.

The electrical circuits discussed above, including the adder circuit for signal detection, the subtractor circuit for tracking and focus error detection, processing circuits incidental thereto, the driving circuit for semiconductor laser, and other necessary circuits are integrated on the electrical substrate 2 arranged in contact with the optical substrate 1 as shown in Fig. 1. This arrangement reduces the whole size and eliminates the need of the signal transmission path and connectors thereof in the space, thereby improving the compactness and reliability. Apart from this, the electrical substrates 1 and 2 may be arranged separately from each other. In that case, the diffraction gratings 41, 42, 43, 44 are not necessarily rquired, but at least each of the optical detectors 50, 51, 52, 53 are required to be arranged in such a manner as to be capable of receiving the guided light. This configuration reduces the stress which might be generated by the difference in thermal expansion coefficient under great changes in ambient temperature, thus improving the reliability against temperature variations.

Now, specific aspects of the electrical processing circuit 70, the computation circuit 71 and the output circuit 72 in Fig. 1 will be explained with reference to Fig. 10. In Fig. 10, the parts defined by the dotted line correspond to the aforementioned circuits respectively. Outputs from the optical detectors 50 to 53 make up a voltage produced by the function of a current-voltage converter 74. These outputs are processed by a subtractor 75 and an adder 76 into a read signal, a track error signal and a focus error signal on the principle described above The read signal is produced outside through a terminal 66, and a track error signal through a terminal 67. If it is necessary to produce a real focus error signal by removing the effect of a track error from it, the computation circuit (specifically, a subtractor) is used appropriately. This effect-removing operation may be performed as required. The focus error signal thus produced, if to be monitored from outside, is applied outside from a terminal 68 on the one hand and to buffers 78 and 79 on the other. The buffers 78, 79 are for converting signals applied thereto into a voltage required for the terminals 30, 31, 32 shown in Fig. 1. These buffers may have either a linear or non-linar relationship between input and output values thereof. Buffers having such characteristics as to compensate for the non-linearity caused by optical or electrical factors could improve the general focusing accuracy while enlarging the focusable range at the same time.

Now, explanation will be made about the fine actuator with reference to Fig. 11. As explained above, the tracking control is implemented for correcting the error (track error) in a target track at the end of the seek operation for moving between distant tracks. This tracking control is divided into two stages, one by driving the actuator 172 (Fig.13) and the other by an actuator built in the optical head 500. The actuator 172 built in the optical head 500, as seen from Fig. 11, is arranged in such a manner as to drive the essential parts of the optical head including the optical substrate 1, the electrical substrate 2 and the semiconductor laser 4 and a support member 160 supporting these parts along the direction y (tracking direction). The piezoelectric ceramics used as the actuator 162 in this example may be replaced with another element which is capable of controlling the amount of drive electrically. A housing 164 making up a package is coupled with a lid 163 having an opening of a size necessary for the incident and emitting light rays. The terminals 58 to 69 in Fig. 1 are connected to an external terminal 165 through a conductor 166. The electricity to the actuator 162 is also supplied through the external terminal 165. In this configuration, upon application of a voltage to the actuator 162, the optical substrate 1 is moved along the direction y thereby to realize a fine tracking.

The lid 163 has an opening for irradiating light on the optical data medium or introducing light from the optical data medium. The lid 163 also has a cover of glass or a material which is transparent at least in the wavelength band of the light used and which extends over the whole opening or surface of the lid 163. In other words, the opening is constituted as a transparent window. By doing so, the optical system is completely packaged for eliminating the adverse effect of dirts, dust, humidity, etc. At the same time, the diffraction gratings are designed taking the effect of the transparent cover into consideration.

Now, explanation will be made of the conditions of use of the external terminal 165 in Fig. 11. This drawing shows connections of respective terminals (pin terminals) as viewed from the top of the package. Of a number of connections available, the architecture of the optical system and electrical system shown in Fig. 1 uses an arrangement permitting a rational connection with an external terminal. Terminals for external parts may be done without or may be supplied in greater numbers.

Although the embodiment shown in Fig. 13 uses an optical head configured as shown in Figs. 1 and 2, the present invention is not limited to such a configuration.

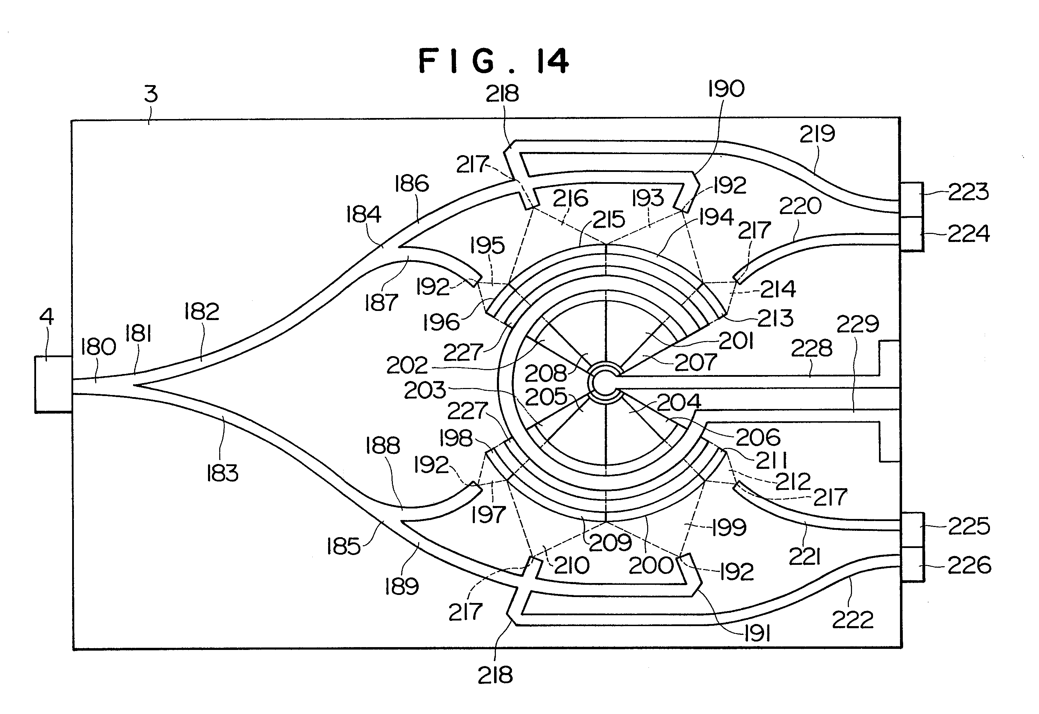

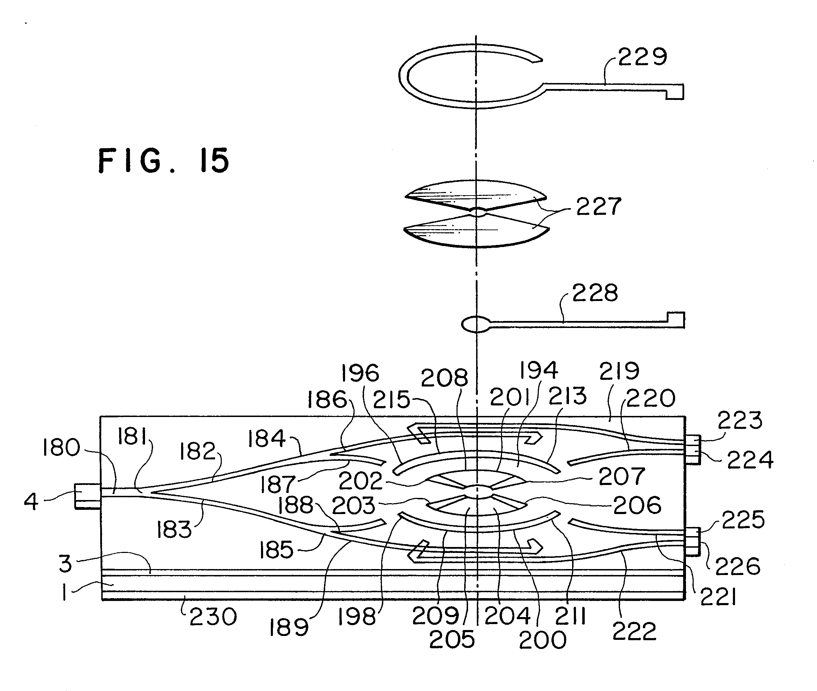

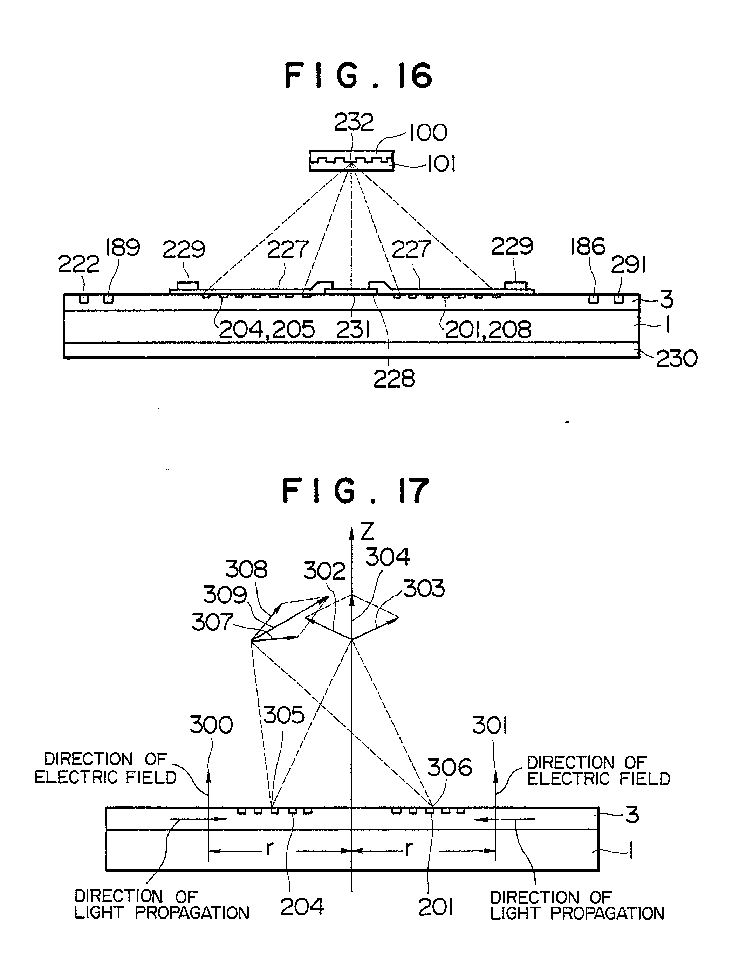

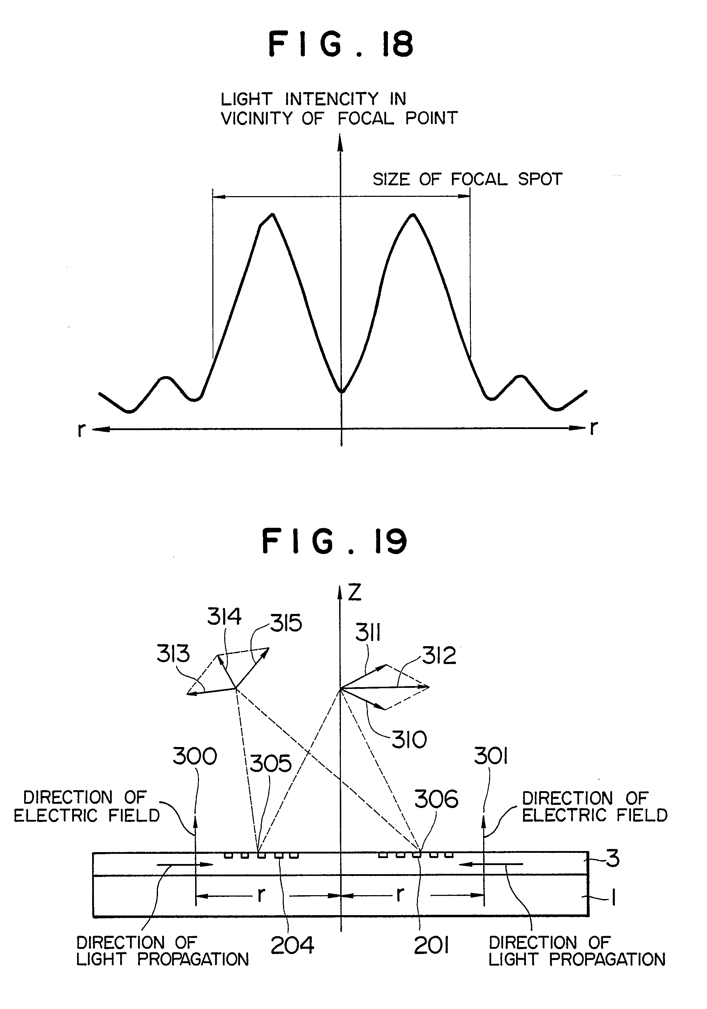

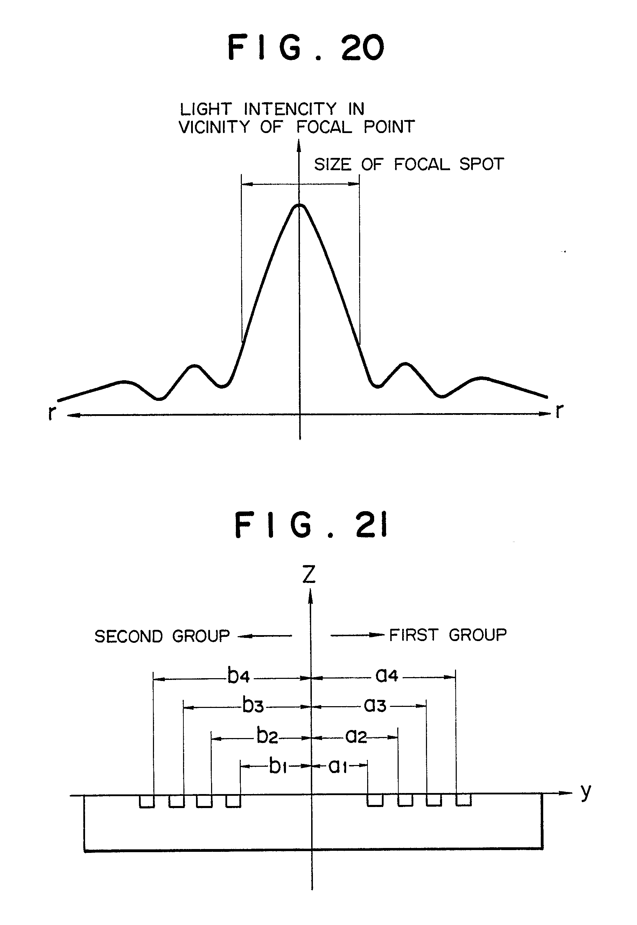

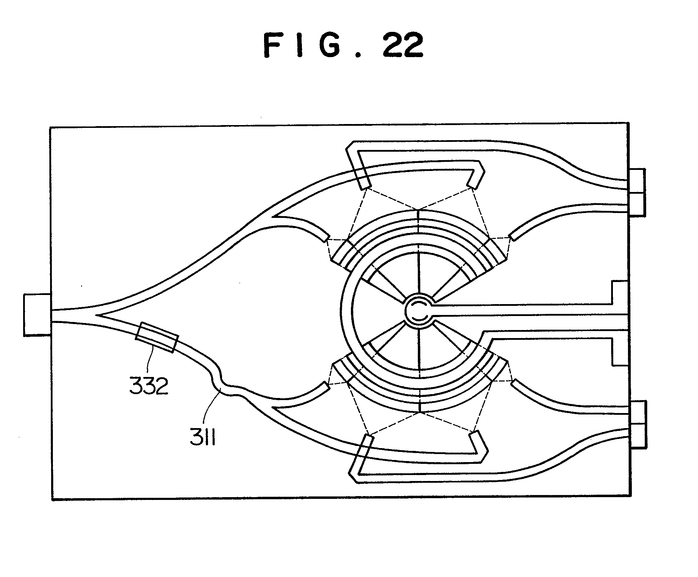

Another embodiment of the optical head will be explained with reference to Figs. 14 to 22. Fig. 14 shows a top plan view of the embodiment, Fig. 15 a perspective view of a hypothetical assembly with partly exploded component parts of the essential parts of the optical system, Fig. 16 a cross sectional view of the embodiment, Figs. 17 and 19 diagrams for explaining the conditions of the electrical field of the light in the vicinity of the focal point, Figs. 18 and 20 diagrams for explaining the light intensity distribution in the vicinity of the focal point, Fig. 21 a detailed sectional view of a diffraction grating, and Fig. 22 a diagram for explaining a phase regulation mechanism.

First, the configuration of the optical system will be described with reference to Figs. 14 to 16. A top plan view of the optical system is shown in Fig. 14, and a cross sectional view thereof in Fig. 15. Fig. 15 is a perspective view showing those parts required for explanation of all the parts in Fig. 14 which are hypothetically exploded in the order of loading on the substrate. Each of the parts may be fabricated by the planar machining technique (photolithography, etching, film forming, beam plotting or other techniques), and therefore the assembly is not necessarily possible to disassemble into individual parts as shown in Fig. 15.

The light emitted from the semiconductor laser 4 enters a three-dimensional optical waveguide 180. This light is divided into two parts at an optical branch 181 and proceeds through three-dimensional waveguides 182 and 183. The light proceeding through the three-dimensional waveguide 183 is branched at an optical branch 184 and the light proceeding through the three-dimensional waveguide 183 at an optical branch 185 respectively into light rays proceeding through three-dimensional waveguides 186 to 189. These three-dimensional waveguides, having a curved portion or a bent portion 190, 191 as required, are placed in the vicinity or within the two-dimensional wavegui e 3 in contact with the optical substrate 1, and the light emitted from the end 192 of each three-dimensional waveguide becomes guided light rays 193, 195, 197 and 199 transmitted through the two-dimensional waveguide 3. Each guided light is transformed into the one condensed at a point 231 in Fig.16 by the function of waveguide lenses 194, 196, 198 and 200. The point 231 in Fig. 16 is located at a position reached by a vertical leg extended from the focal point 232 to the waveguide 3 or in the vicinity thereof. These guided light rays of condensation type are emitted from the waveguides by diffraction gratings 201, 202, 203 and 204 concentric around the point 231 in Fig. 16 and focused at a focal point 232 in Fig. 16. The light reflected at the focal point 232 is converted into the light transmitted through the waveguides by the diffraction grating 201; the emitted light emitted by the grating 205; the light emitted at the diffraction grating 202, by the diffraction grating 206; the light emitted at the diffraction grating 203, by the diffraction grating 207; and the light emitted at the diffraction grating 204, by the diffraction grating 208, respectively. For this purpose, the opening portion of the waveguide 3 of the diffraction gratings of each diffraction grating pair mentioned above is arranged in rotational symmetry with respect to the point 231 in Fig. 16. The light which is converted into a guided light again is transformed into a condensing guided light 210, 212, 214 and 216 by the waveguide lenses 209, 211, 213 and 215 and thus becomes the light rays transmitted from each end 217 of the three-dimensional waveguides through the three-dimensional waveguides 219, 220, 221 and 222. These three-dimensional waveguides have a curved or bent portion 218 as required. These guided lights are introduced to optical detectors 223, 224, 225 and 226 where they are converted into an electrical signal.

The diffraction gratings 201 to 208 are formed in concentrical manner around a point 231 in Fig. 16. The diffraction gratings 201 to 205, 208 have the same pitch distribution along radial direction and focal points located on the optical data medium surface. The diffraction grating 206 is designed with a slightly short focal length and the diffraction grating 207 with a slightly long focal length for the purpose of focus error detection on the same principle as in the embodiment described with reference to Figs. 1 to 13. The methods of track error detection and removal of the track error signal from the focus error signal are also similar and will not be described again.

As in the aforementioned embodiment, the focal length is variable also in Fig. 14, and therefore the waveguides have an electro-optic effect. By applying an electric field to these waveguides, the focal length is controlled. For this purpose, a voltage is applied to the electrodes 228 and 229 with the electrode 230 as a reference. A conductive translucent matrial 227 which is transparent in the wavelength band of the light source used herein is interposed between the electrodes 228 and 229. In view of the fact that an excessively small resistance value would cause an excessive current between the electrodes 228 and 229, the thickness, components, etc. of the translucent material 227 are regulated between the electrodes 228 and 229. The method and object of giving a distribution of an applied voltage in the radial direction around a point 231 are the same as those in the aforementioned embodiment.

In the case where the diffraction grating for applying or emitting the light in the waveguide as an external light is divided into several parts, the light is capable of being transmitted efficiently and stably to the diffraction gratings for incident and emitting light by producing a three-dimensional waveguide partially in the planar waveguide. In place of a three-dimensional waveguide, an otpical system may be configured with a planar waveguide lens of a component element having an equivalent function.

The diffraction gratings, that is, diffraction gratings 201, 202, 203, 204 for emitting light are divided by group with a straight line hypothetically conceived on the waveguide 3 including the point 231, and in each region, the phae of the light emitted from the diffraction grating is adjusted for a reduced spot size at the focal point, thereby improving the optical characteristics. First, explanation will be made of the phase regulation by use of Fig. 19 taking into consideration the case lacking phase adjustment.

Figs. 17 and 19 are cross sectional views of the embodiment of Fig. 14. These cross sectional views are taken along a plane parallel to the y-z plane slightly sided to +x direction from the origin, and the unrequired parts are not shown in these drawings for facilitating the understanding.

First, in the case where the phase relationship of the guided light is symmetric with respect to the x-axis, that is, the optical characteristics of the optical system are symmetric with respect to the x-axis, assume that the light of TM mode is used as the guided light. The electric field of light is directed in the direction of z as shown in Fig. 17. At mutually opposite points, the phase of wave behaviour is identical. The directions of the electric field at the point 301 of y = r and the point 300 of y = -r at a given instant are identical to each other, and an in the directionof +z in the drawing under consideration. When, however, the direction of the electric field at a given point is considered in the subsequent description, since this direction is oscillated with time, emphasis will be placed only on the relationship of mutual directions. Assume that a guided light is emitted at points 305 and 306 on the diffraction gratings 201 and 204, and reaches a focal point at another instant. At that time, the electric fields of the light are in the directions 302 and 303 as shown in the drawing. These electric fields are symmetric with respect to the x-y plane, and therefore the y-component is substantially offset. In view of the fact that the electric fields 302 and 303 have a comparatively large intersection angle, it is seen that the electric field remaining at the focal point is constituted by the electric field 304 smaller than the electric fields 302 and 303. A point moved along the y direction by about the wavelength from a focal point exists at a position where the direction of the electric field of light emitted from the point 305 is 308 and that of the electric field of light emitted from the point 306 is 307. Since the two electric fields intersect each other at a comparatively small angle, the combined electric field is as large as designated by 309. When the distribution of light intensity that is the square of the electric field intensity in the direction z around the focal point is considered, the graph of Fig. 18 is obtained. As seen from this, the maximum peak of the light intensity appears at a point somewhat away from the focal point, thereby enlarging the focal point spot.

In order to prevent this enlargement of the focal point spot and thus obtain satisfactory optical characteristics, the direction of the electric field at the focal point is directed in the same direction along the z-axis like the electric fields 310 and 311. By doing so, mutual electric fields intersect at a comparatively small angle with a large electric field 312 at the focal point. In addition, the distribution of light intensity along the y direction in the vicinity of the focal point is as shown in Fig. 20 with a focal point spot smaller than in Fig. 18.

As an embodiment having the aforementioned relationship of the electric fields 310 and 311 in Fig. 19, the diffraction gratings 201 to 208 in Fig. 14 are divided into a first group including the diffraction gratings 201, 202 and a second group including the diffraction gratings 203, 204. Specifically, a hypothetical straight line coincidental with the x-axis passing through the origin is considered, so that the diffraction gratings are grouped into the +y and -y sides. Further, each group is handled in the manner that will be mentioned. The wave front of the light emitted from the light source 4 which has reached the focal point out of the diffraction grating 201 through the waveguide 186 is rendered equal to the phase of the light emitted from the light source 4 which reaches the diffraction grating 202 through the waveguide 187. These light rays are considered as a first group. As a second group, the wave front of the light that has reached the focal point out of the diffraction grating 203 through the waveguide 188 is rendered equal to the phase of the light emitted from the light source 4 which reaches the diffraction grating 204 through the waveguide 189. In order to secure the relationship of electric fields as shown in Fig. 19, the pitches of the diffraction gratings are changed by group or the route to the diffraction gratings is adjusted somewhat by group, thus regulating the relationship of wave fronts of mutual groups at the focal point.

Fig. 21 is a diagram showing the same sectional view as Figs. 17 and 18 except for those other than not required for explanation. Fig. 21 is used for describing a method of regulating the pitches of the diffraction gratings by group as mentioned above. As shown in Fig. 21, assume that the radii of the diffraction gratings are a1, a2, a3 and so on from the inner periphery in the first group, and b1, b2, b3 and so on in the second group. The pitches of the diffraction gratings of the second group are displaced from those of the first group by half pitch, as specifically shown by a simple equation below.

$$b_n = (a_{n+1} + a_n)/2 \qquad (1)$$

where n = 1, 2, 3 and so on.

If $b_n$ assumes the value indicated by equation (1) or near thereto, it follows that the light emitted from the diffraction gratings of the first group is displaced by 180 degree out of phase from the light emitted from the diffraction gratings of the second group, so that the phase of the electric field 302 in Fig. 17 is inverted into an electric field 310 shown in Fig. 19, thus realizing the relations shown in Fig. 19.

Apart from this, another embodiment for realizing the aforementioned relationship between the electric fields 310 and 311 in Fig. 19 is shown in Fig. 22. In Fig. 22, explanation will be made of a method of adjusting somewhat the route to the diffraction gratings for each group. More specifically, the waveguide 183 is provided with an extension 331, the optical distance of which is designed to be longer by half wavelength than the waveguide 182. As an alternative, a part of high refractive index (or low refractive index) is formed above the waveguide 183 thereby to change the effective optical distance by group. For realizing a part of high refractive index (or a part of low refractive index), such a part is prepared at the same time as the waveguide or a voltage or heat is supplied only to the particular part or otherwise to differentiate the refractive index of the particular part.

The configuration of an optical system explained with reference to Figs. 14 to 22 permits a larger real NA in forming a focal point on the optical data medium than that of the optical system shown in Figs. 1 and 2, thus reducing the diameter of the light spot on the optical data medium.

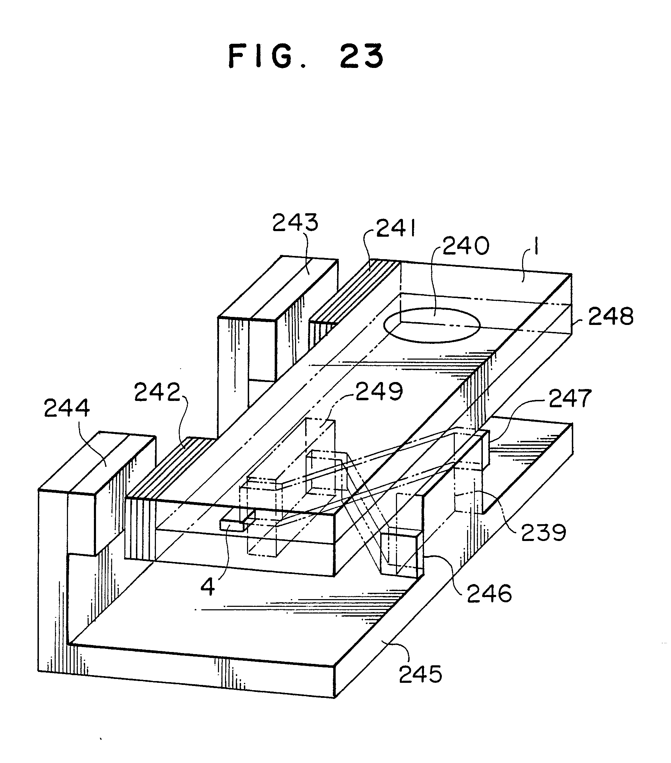

Now, another embodiment of the fine tracking mechanism will be explained with reference to Fig. 23. Fig. 21 is a perspective view of a fine tracking mechanism.

The optical system is shown only with the component elements including a semiconductor laser 4, an optical substrate 1, a diffraction grating 240, etc., and detailed parts, which are identical to those of other embodiments mentioned above and will not be explained any more. The substrate 1 is supported in contact with a support member 248. The support member 248 includes a protrusion 249 which is coupled with a protrusion 239 of the base member 245 by means of crossed spring plates 246 and 247. The support member 248 is connected with coils 241, 243, which are in opposed relationship with magnets 243, 244 supported on the base member 245. When current is supplied through the coils, the parts integral with the member 248 are rotated. In the process, a smooth operation is secured if the positions and styles of the protrusion 246 and 249 are determined in such a manner that the center axis of rotation passes through the gravitational center of the moving parts integrated with the member 248.

If the center of rotational motion is displaced from the center of the diffraction grating 248, the rotational motion causes the diffraction grating 240 to move within the X-Y plane, therby assuring fine tracking motion.

This embodiment has an effect of having a larger tracking range than the tracking mechanism shown in Fig. 11.

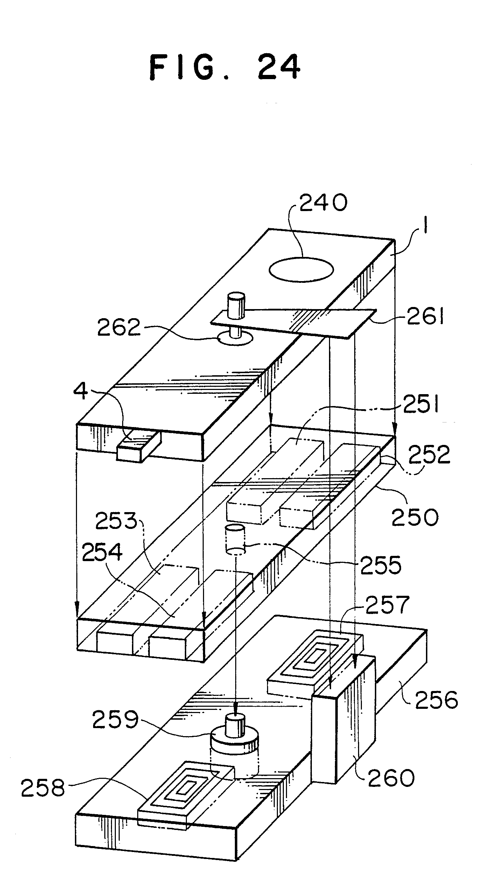

Now, another embodiment of the fine tracking mechanism will be explained with reference to Fig. 24, which is a perspective view showing the assembly conditions of the parts used in the embodiment.

An optical system is shown only with the semiconductor laser 4 and the diffraction grating 240 arranged on the optical substrate 1. The optical substrate 1 is supported on the support member 250, which in turn has arranged thereon magnets 251, 252, 253 and 254. These magnets are placed in opposed relationship with coils 257, 258 arranged on the base member 256. The support member 250 has a recess 255 which is fitted in a protrusion 259 of the member 256 and provides a shaft around which the member 250 is adapted to revolve. When current is supplied to the coils 257 and 258, the member 250 is rotated, thereby causing a swinging motion of the diffraction grating 240. This accomplishes the fine tracking motion.

The coils and magnets may be arranged in each other's positions as an alternative. Specifically, the magnets 251, 252, 253, 254 may be arranged on the member 256, and the coils 257, 258 on the support member 250.

This embodiment assures a larger tracking range than the tracking mechanism shown in Fig. 11 as well as a high rigidity against the lateral acceleration at the time of rough access.

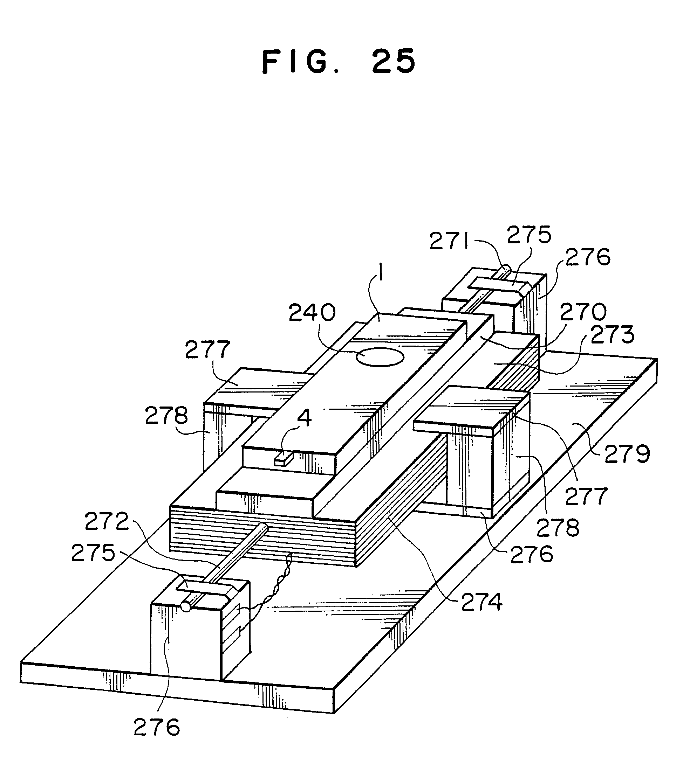

Now, still another embodiment of the fine tracking mechanism will be explained with reference to Fig. 25. An optical system is shown only with the optical substrate 1, the diffraction grating 240, the semiconductor laser 4 and the electrical substrate 270. These components of the optical sysem are arranged on a support member 273, which in turn has arranged thereon a coil 274. The support member 273 has arranged thereon a shaft 272 supproted rotatably by a bearing 276 and a support spring 275. The bearing 276 is supported on the member base 279. The base member 279 has supported thereon a magnet 278 held by a metal member 277. The metal member 277 and the magnet 278 exert a magnetic field on a part of the coil 274. When current is supplied to the coil 274, the optical system revolves around the shaft 272 thereby to effect fine tracking.

The embodiment under consideration provides a high rigidity against the lateral acceleration at the time of rough access.

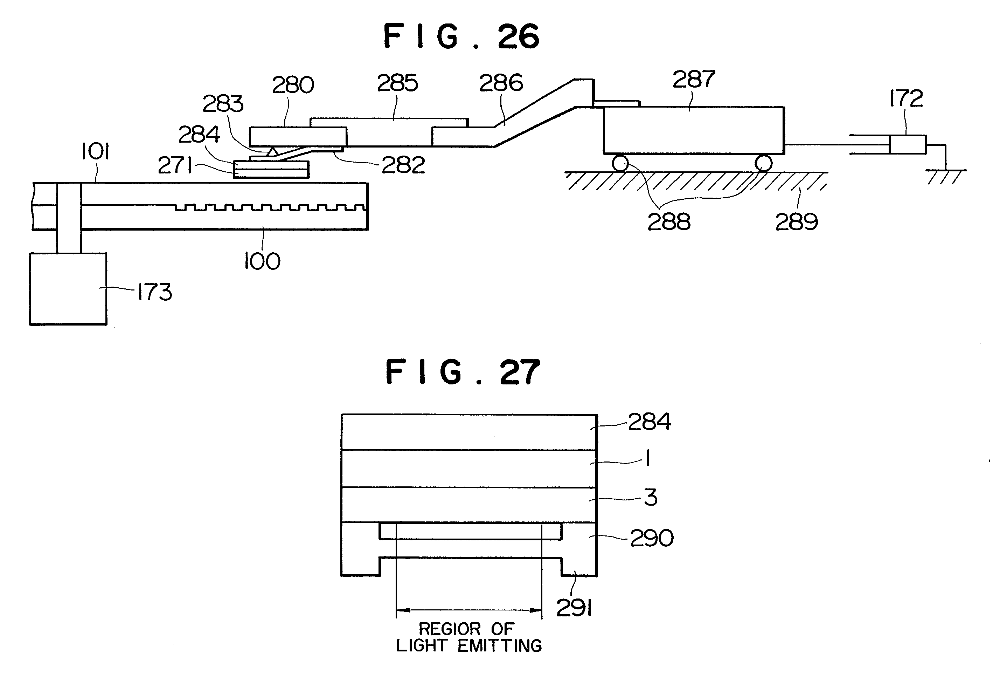

Now, another embodiment of the fine tracking mechanism and the rough access mechanism will be explained with reference to Figs. 26 and 27. Fig. 26 is a side view, and Fig. 27 a cross sectional view of an optical system. Above the optical data medium 100 rotated by a motor 173, the substrate 271 and the support member 284 raised or floated pneumatically from the optical data medium 100 and the protective film 101, are supported by arms 280, 286, 282, an actuator 285 and a pin 283, which are fixedly secured to a support member 287. The support member 287, in turn, is drivable along radial direction of the optical data medium by a straight guide mechanisms 288, 289 and an actuator 172. The optical system on the substrate 271 permits light to be irradiated on the optical data medium 100.

In this mechanism, the rough access is effected by the operation of the support member 287. The fine tracking mechanism is not required, if the positioning accuracy of the rough access mechanism is sufficiently high as compared with the tracking pitch of the optical data medium 100. In view of the very high accuracy required of a single-stage rough access mechanism, the use of a fine tracking mechanism with the actuator 285 simplifies the rough access mechanism. As an example, fine tracking is made possible by expansion/contraction of the actuator 285 using a piezoelectric device or the like. The member 284, on the other hand, in order to flexibly meet the waviness, warping, etc. of the optical data medium 100 and the protective film 101, is supported softly with the member 280 on the arm 282, pin 283, etc. This permits a narrow control of focal point range within the optical system, thus faciliating the design of an optical system. The optical system is provided with a protective member 290 shown in Fig. 25 for preventing the light-emitting part from being damaged or the light emission performance from being deteriorated by an unexpected frictional motion which might occur between the optical substrate 1 and the optical data medium 100 or the protective film 101. Also, the waveguide 3 on the optical substrate 1 mounted on the support member 284 is formed with a slit to cover the light-emitting part. When the optical data medium 100 and the protective film 101 start to rotates from the stationary state thereof, or when they slide due to an external distrubance or the like while in revolutions, only the protrusion 291 is in frictional motion without any effect on the light-emitting part.

This embodiment reduces the thickness of the optical system and the mechanisms on the optical data medium and the height of the whole apparatus. In addition, when an optical data medium is layered on the rotational axis of the same motor, the distance between disks is lessened. It is thus possible to build a greater amount of optical data media in the same apparatus for an improved memory capacity thereof.

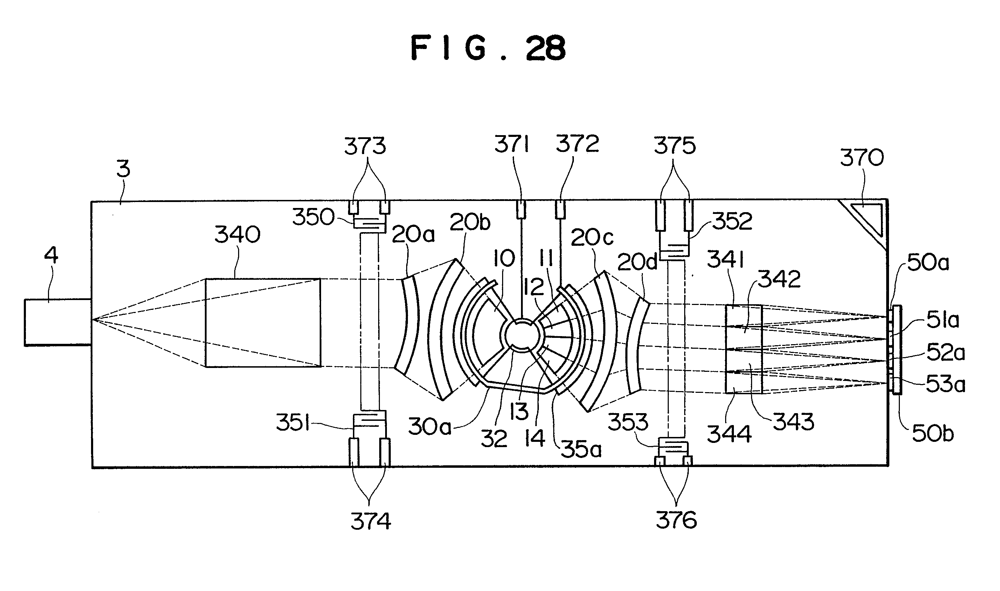

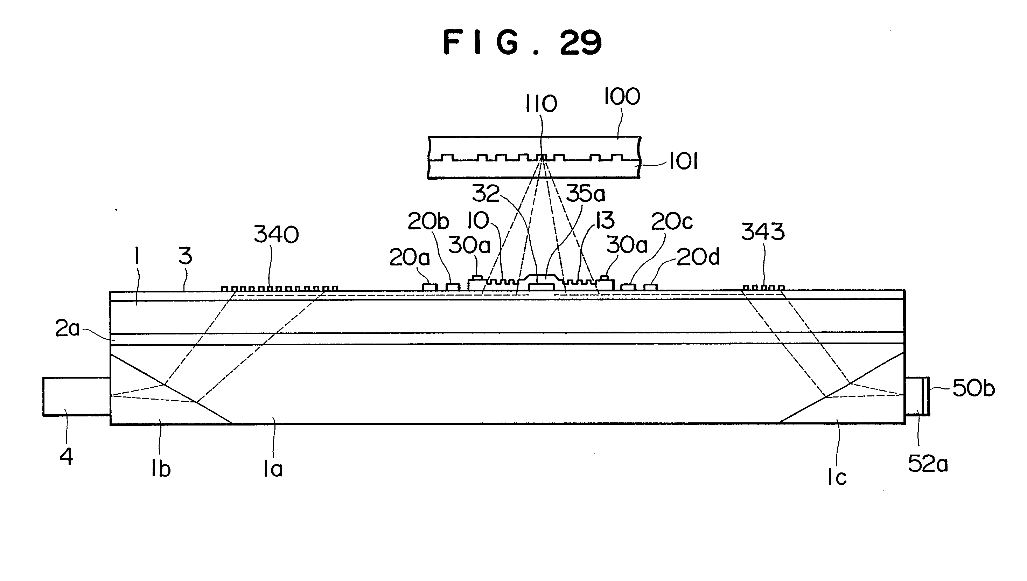

Now, another embodiment of the optical head according to the present invention will be explained with reference to Figs. 28 and 29. A top plan view of the embodiment and a cross sectional view thereof are shown in Figs. 28 and 29 respectively.

First, reference is made to Figs. 28 and 29 at the same time for explaining the operation of the present embodiment. The light beam emitted from the semiconductor laser 4 is deflected by the function of a prism 1b shown in Fig. 29, and is irradiated on a diffraction grating 340. This diffraction grating 340 converts the light outside of the waveguide into a guided light beam within the waveguide by diffraction. In the process, the semiconductor laser 4 is maintained in horizontal position while irradiating light on the diffraction grating 340 by using the prism 1b. This prevents the thickness from being increased by a diagonal position of the semiconductor laser and minimizes the thickness of the optical head. Further, in view of the compratively deep angle (An angle is considered "deeper" when the direction of advance of light is more perpendicular to the waveguide surface, and vice versa) at which the light enters the diffraction grating 340, the region covered by the diffraction grating 340 is reduced. In other words, the problem of a large area which might be required of the diffraction grating 340 upon light entrance at a shallow angle is eliminated by light entrance at a deep angle.

The prism 1b may be fixed in bondage with the substrate 1a. By doing so, the alignment of the prism 1b is secured, thereby assuring a high optical characteristic for long time.

The light beam which has been converted into a guided light beam by the operation of the diffraction grating 340 is deflected by the function of SAW transducers 350 and 351 for generating a surface elastic wave. The deflection by the surface elastic wave is described in detail in "Hikari Shuseki Kairo (Optical Integrated Circuits)" by Hiroshi Nishihara, et al., p.p. 320 to 335, published by Ohm Publication, 1985. The use of such a deflector permits a high-speed deflection of the light beam within the waveguide surface, finally leading to a fine tracking operation on the optical data medium. The SAW transducers 350 and 351 are connected through terminals 373 and 374 respectively to a driving circuit and a receiving circuit not shown.

The light beam deflected by the surface elastic wave enters the waveguide lenses 20a and 20b. The style of each of the waveguide lenses is described in detail in the above-cited reference, p.p. 279 to 292. Assume that a negative waveguide lens is used as 20a, and a positive waveguide lens as 20b to produce the same effect as a whole. A positive lens is defined as a lens having a focal length of positive value, and a negative lens as one having a negative focal length.

This construction enables the chromatic aberration of all aberrations generated in the lenses to be corrected and thus waveguide lenses with a small aberration are configured. The correction of the chromatic aberration is especially conspicuous in the case where the waveguide lenses 20a and 20b use a diffraction grating. Although the embodiment under consideration is depicted with a negative waveguide lens 20a and a positive waveguide lens 20b, the same effect is obtained by using a positive waveguide lens 20a and a negative waveguide lens 20b. It is also possible to use a group of three or more waveguide lenses including at least one each of positive and negative waveguide lenses. The foregoing description of a waveguide lens group having a positive effect also applies to a waveguide lens group having a negative effect.

A positive lens may be used as each of the waveguide lenses 20a and 20b. In a lens configuration, the amount of aberration sharply increases with the increase in NA (Numerical Aperture). In order to avoid such an inconvenience by configuring lenses of the same NA, a multiplicity of waveguide lenses of a small NA are used to make up a waveguide lens group of an intended NA. This procedure reduces the amount of aberration of the whole system as compared with a single waveguide lens of a large NA value. Apart from the foregoing description referring to a combination of two positive waveguide lenses of a small NA, three or more waveguide lenses of a small NA in combination could further reduce the amount of aberration. This is also the case with a waveguide lens group having a negative effect to the extent that the lenses included have a small NA value.

The waveguide lenses 20a and 20b deflect the guided light to form a focal point within the waveguide surface. This focal point is scanned in the direction substantially perpendicular to the direction of proceeding of the guided light beam within the plane of the waveguide surface as a result of the above-mentioned deflection with the surface elastic wave.

The guided light beam is emitted out of the waveguide surface by the operation of the diffraction grating 10 before reaching this focal point, and thus forms a focal point at a position 110. This diffraction grating 10 is constructed to include grating slits formed substantially concentrically around a specific point on the waveguide surface. The specific point preferably coincides with the focal point formed by the waveguide lenses 20a and 20b. This is because in such a case the light rays become symmetric to each other with respect to a rotational axis perpendicular to the waveguide surface and passing through the specific point. The symmtry with respect to a rotational axis greatly reduces the aberration generated at the focal point 110 under variations in focal length. If the focal points of the waveguide lenses 20a and 20b fail to coincide with each other, the light rays would also fail to be symmetric with respect to a rotatonal axis, so that an aberration non-symmetric with respect to an axis would begin to occur at the focal point 110. The two lenses should, therefore, be located as in proximity to each other as possible. In view of the fact that the focal point of the guided light beam is scanned as mentioned above, it is possible to minimize the positional displacement between the two lenses by disposing the specific point mentioned above half way in the scanning range of the focal point of the guided light beam. The amount of aberration caused in the focal point 110 is thus prevented from increasing.

Beside forming the diffraction grating 10 as a concentric circle with the center at the aforementioned position, the slit of the diffraction grating 10 may be constructed of an ellipse, a hyperbola or a parabola with the center thereof located at or in the vicinity of the scanning range of the focal point within the waveguide surface. In this way, in spite of the amount of aberration increasingly caused at the focal point 110 in the vicinity of the scanning center when the focal point is scanned within the waveguide surface, the maximum amount of aberration during maximum scanning is reduced.

The light beam diffracted in the diffraction grating 10 is condensed at the focal point 110 on the optical data medium 100 placed in contact or in proximity to the protective film 101. The optical data is optically read out from the optical data medium by modulating the phase of the light beam in accordance with the presence or absence of data, by modulating the quantity of reflected light or by modulating the direction of deflection. In writing the data, on the other hand, the characteristics of the optical data medium material are changed or the style of the medium is locally changed.

The light beam reflected on the optical data medium 100 is converted into a light beam propagated through the waveguide 3 by the function of the diffraction gratings 11, 12, 13, 14. The diffraction gratings 11, 12, 13, 14 are formed in such a style as described with reference to the diffraction grating 10 in the form of a concentric circle having the center at a specific point, or an ellipse similar to a concentric circle, hyperbola or a parabola having the center thereof within or in the vicinity of the scanning range of the focal point within the waveguide surface. These styles are generally called a concentric circular form.

The pitch distribution of the grating slits from the central position are the same for the diffraction gratings 10, 11 and 14, but they are arranged in finer form for the diffraction grating 12 and rougher for the diffraction grating 13. (As an alternative, the slits are finer for the diffraction grating 13, and rougher for the diffraction grating 12, although the fact remains that slits are formed in concentric manner for both the diffraction gratings.) The difference of roughness of pitch distribution of the diffraction gratings set as above is for detecting a focus error signal indicating the degree to which the optical data medium 100 is displaced from the right focal point. The pitch of the slits of the diffraction grating 13 is larger than that of the diffraction grating 10. As a result, the diffraction grating 13 couples strongly within the waveguide the light reflected from the position displaced toward the waveguide from the focal point produced by the diffraction grating 10. Specifically, the light is coupled strongly at the diffraction grating 13 when the optical data medium is located toward the waveguide from the focal point. The slit pitches of the diffraction grating 12, on the other hand, is smaller than that of the diffraction grating 10. As a consequence, the diffraction grating 12 acts to strongly couple within the waveguide the reflected light on the side far from the waveguide from the focal point produced by the diffraction grating 10. More specifically, the light is coupled strongly on the diffraction grating 12 when the optical data medium is located on the side of the focal point far from the waveguide. If the light rays coupled at the diffraction gratings 12 and 13 are detected together with the difference of the outputs thereof, it is possible to detect a focus error quantity. In this configuration, even if the focal point is changed by changing the focal length of the diffraction grating 10 as mentioned later, a focus error signal is detected in accordance with only the amount of displacement between the positions of the focal point and the optical data medium regardless of the change in focal point.

The light converted into guided light rays by the respective diffraction gratings is in turn converted into substantially parallel light rays by the function of the waveguide lenses 20c and 20d. The function and configuration of the waveguide lenses are the same as those mentioned with reference to the waveguide lenses 20a, 20b.

The waveguide lenses with the diffraction grating 10 entered by the light (a group of lenses including the waveguide lenses 20a and 20b in this case) may be configured as a waveguide lens group having more waveguide lenses than those receiving the light from the diffraction gratings 11, 12, 13, 14 (a group of lenses including the waveguide lenses 20c and 20d in this case). For example, two waveguide lenses make up a waveguide lens group on the side of the diffraction grating 10, and a single waveguide lens is arranged for the diffraction gratings 11, 12, 13, 14. More specifically, minimizing the amount of aberration of the light at the focal point 110 improves the read or write characteristics of the optical data medium. On the other hand, such severe conditions as those for the focal point 110 are not imposed on the amount of light aberration on the optical detectors entered by the reflected light. Thus, a greater number of waveguide lenses are used for the diffraction grating 10 than for the diffraction gratings 11, 12, 13, 14. By doing so, the aberration at the focal point 110 is kept minimum while at the same time simplifying the optical configuration, thereby facilitating the preparation of the optical system.

The substantially parallel light rays obtained from the waveguide lenses 20c and 20d are deflected by SAW transducers 352 and 353 for generating a surface elastic wave. This deflection with the surface elastic wave is similar to that described above with reference to the SAW transducers 350 and 351. Also, the terminals 375 and 376 are similar to the terminals 373 and 374 mentioned above.

The light deflected by the SAW transducers 352 and 353 become the light outside of the waveguide or the out-waveguide light by the operation of the diffraction gratings 341, 342, 343, 344, and are converted into electrical signals through optical detectors 50a, 51a, 52a, 53a.

The deflection at the SAW transducers 352 and 353 is the same in amount as but opposite in the direction to that at the SAW transducers 350 and 351. As a result, the deflections at these transducers are offset with each other, so that the direction of the light deflected at the SAW transducers 352 and 353 always remains fixed. The aberration is also prevented which otherwise might be caused by variations in the direction of advance of the guided light entering the diffraction gratings 341, 342, 343, 344, thus minimizing the amount of aberration generated on the optical detectors 50a, 51a, 52a, 53a.

As long as the amount of deflection is small at the SAW transducers 350 and 351, only a small amount of aberration is caused by variations in the direction of advance of the guided light entering the diffraction gratings 341, 342, 343, 344, and therefore the SAW transducers 352 and 353 may be done without.

The light rays emitted from the diffraction gratings 341, 342, 343, 344 are deflected by the function of the prism 1c and enter the optical detectors 50a, 51a, 52a, 53a. This prism operation allows the optical detectors to be arranged without a considerable inclination against the waveguide surface, thereby keeping a low height which otherwise would be increased by an inclined arrangement of the optical detectors. The prism 1c may be bonded to the substrate 1a.

The reasons why the diffraction gratings 341 to 344 are used to introduce the light into the optical detectors 50a, 51a, 52a, 53a are in order to facilitate the optical head construction of an optimum configuration by improving the freedom of arrangement of the optical detectors on the one hand and in order to further improve the accuracy of the focus error signal on the other. Specifically, if the focus error signal is to be detected accurately, it is necessary to detect only those light rays which have been transformed into guided light at the diffraction gratings 12 and 13 by the optical detectors 51a and 51b. Nevertheless, part of the light rays diffracted at the diffraction gratings 12 and 13 becomes a useful guided light, whereas the remaining light is propagated in proximity to but outside of the waveguide. These two parts of light, which advance in substantially the same direction, are difficult to discriminate for detecting the guided light alone. The diffraction gratings 341 to 344 disposed in or in the vicinity of the waveguide diffracted only the guided light. The use of the diffraction gratings 341 to 344, therefore, makes it possible to separate effective guided light rays sufficiently from the light rays diffracted unnecessarily and send them to the optical detectors, thus improving the accuracy of the focus error signal.

The light detected at the optical detectors 50a, 51a, 52a, 53a become a read signal with the addition thereto of the signals from the optical detectors 50a and 50d. The signal from the light detector 50d is subtracted from the signal produced from the optical detector 50a to make up a track error signal. On the other hand, the signal from the optical detector 50c is subtracted from the signal produced from the optical detector 50b, and the track error signal is again subtracted at a predetermined rate from the difference to produce a focus error signal.

The apparatus may further comprise an optical detector for detecting the light quantity emitted from a semiconductor laser, the detected light quantity being used for normalizing the above-mentioned read signal, the track error signal and the focus error signal. In that case, signals are produced without being affected by the variations in the quantity of the light from the semiconductor laser making up a light source. Further, if an adder circuit is used for producing the sum of outputs from the optical detectors 50a, 51a, 52a, 53a to normalize the read signal, the track error signal and the focus error signal, then the effect of light source variations is similarly reduced.

By use of the track error signal, an electrical signal having a frequency corresponding to the track displacement is supplid to the required ones (say, SAW transducers 350 and 353) out of the SAW transducers 350, 351 and the SAW transducers 352, 353, whereby the focal point is moved along the tracking direction of the optical data medium 100 thereby to correct the track displacement. In this way, a fine tracking mechanism free of mechanical moving parts is realized.

Using the focus error signal, on the other hand, a corresponding voltage is applied to the electrodes 30a and 32 through the terminals 371 and 372. The electrodes 30a and 32, which are resistive members (assumed to have a voltage resistance of a value intermediate an insulating material and a good conductor), are connected electrically by a material 35a having a light-transmitting characteristic (called a translucent material) at least in the wavelength band of the light. Since the translucent material 35a has a resistance value corresponding to the structure and substance thereof, however, the electrodes 30a and 32 are not shortcircuited even if different voltages are applied thereto. By the words "voltages are applied" are meant applying an output from some electrical circuit while always being connected to the earth.

As far as the same voltage is applied to the electrodes 30a and 32, the translucent material 35a remains uniform between the two terminals and the two electrodes are maintained at the same potential. When different voltages are applied to the electrodes 30a and 32, by contrast, a slight current flows in the translucent material 35 and a voltage drop occurs by the internal resistance of the translucent material 35. As a result, the translucent material 35a develops a potential distribution rotationally symmetric with respect to a specific point between the two terminals. The production of this distribution of potentials desirably results in an always constant change in focal length over the enter range of the diffraction grating 10 and hence a focal point 110 small in aberration, as will be described more in detail below.

A voltage which is different from at least one of the voltages applied to the electrodes 30a and 32 is applied through the terminal 370 to the electrode 2a which is a translucent and conductive material. In this way, an electric field is generated between the translucent material 35a and the electrode 2a (or further between the electrodes 30a and 32 and the electrode 2a). If at least one of the waveguide 3 and the substrate 1 is made up of material having an electro-optic effect, the refractive index thereof is changed by the electric field. This in turn causes a change in equivalent refractive index in the waveguide, thus changing the coupling angle for coupling the guided light with the external light at the diffraction gratings 10 to 14. As a consequence, the position of the focal point formed by the light emitted from the diffraction grating 10 is changed in the direction perpendicular to the surface of the optical data medium, so that an electrical focusing system is configured without any mechanically moving parts while at the same time coupling the reflected light from the optical data medium within the waveguide by the diffraction gratings 11 and 14 without sacrificing the coupling efficiency even if the focal point undergoes a change. Further, even the focal point is changed, the focus error signal detected by the diffraction gratings 12 and 13 can be detected not by the change in focal length but simply by relative positions of the focal point and the optical data medium.

If the focal length is changed by applying the same voltage to the electrodes 30a and 32, the focal length is changed in different amounts at parts of the diffraction grating 10 near to and far from the above-mentioned specific point. An attempt to shorten the focal length, for example, might result in an excessively short focal length at the part near to the specific point as compared with the point far therefrom. When the intention is to lengthen the focal length, in contrast, the result would be too long a focal length at the part near to the specific point as compared with the point far therefrom. A change in focal length, therefore, would cause an aberration at the focal point 110, which is not ignorable when a large amount of change in focal length is involved. In order to compensate for this aberration, different voltages are applied to the electrodes 30a and 32. Specifically, the voltage difference between the electrodes 32 and 2a is reduced as compared with that between the electrodes 30a and 2a. For example, the terminals 32 and 370 are kept grounded, while the electrode 30a is impressed with a voltage according to the focus error signal. As a result, the electric field applied to the part of the diffraction grating 10 near to the specific point is weakened, and a reduced amount of change in focal length at this particular part leads to an always constant change in focal length over the entire range of the diffraction grating 10, thereby producing a focal point 110 small in aberration. In the case where a small amount in change of focal length is allowed, on the other hand, the small amount of aberration poses no problem even if the focal length is changed by applying the same voltage to the electrodes 30a and 32.

The terminals 30a and 32 may be integrated with the translucent material 35a by use of the same matrial to simplify the construction. Also, a good conductor such as aluminum may be used for the terminals 30a and 32. When a good conductor like aluminium is used for the electrode 30a, on the other hand, the terminal 30a is arranged on the translucent material 35a. By doing so, the translucent material 35a makes up a buffer layer permitting the efficient transmission of the guided light without being absorbed.

If a good conductor like aluminum is used for the electrode 32, by contrast, the electrode 32 is arranged in contact with the waveguide 3. This is in order to enable the terminal 32 to absorb the guided light not diffracted at the diffraction grating 10. This configuration prevents the guided light from being superimposed on the signal light transformed into the guided light at the diffraction gratings 11 to 14 and the quality of the electrical signal detected at the optical detectors 50a to 53 is thus improved. Further, if a slit is formed in the waveguide layer in the vicinity of the specific point mentioned above to deflect the light not diffracted, it is possible to prevent the guided light from being superimposed on the signal light transformed into the guided light at the diffraction gratings 11 to 14.

The diffraction gratings 10 to 14 may be formed by slits in the surface of the translucent material 35a. In this case, the translucent matrial 35a has the function of an electrode and that of a diffraction grating at the same time. As compared with the case where an electrode and a diffraction grating are provided separately from each other, the construction is simplified to facilitate the production.

The translucent material 35a is supplied with a current, and the resulting heat generated by the resistance is used to heat the waveguide 3 and the substrate 1, so that the refractive index is changed by the thermo-optic effect. This causes the equivalent refractive index in the waveguide to be changed, thereby making up an electrical focusing system without mechanically moving parts as when the electro-optic effect is utilized. This configuration produces a refractive index larger than the electro-optic effect, thus permitting a larger range of focal length adjustment.

According to the present embodiment, the focusing and tracking operations are performed optically without any mechanically moving parts, resulting in a higher speed of operation, an improved transfer speed (due to the possibility of the rotational speed of the optical data medium being increased by an increased tracking speed), an improved reliability for lack of mechanically moving parts, a higher productivity, a shorter access time due to a lighter weight of the optical head and a thinner and compact optical head.

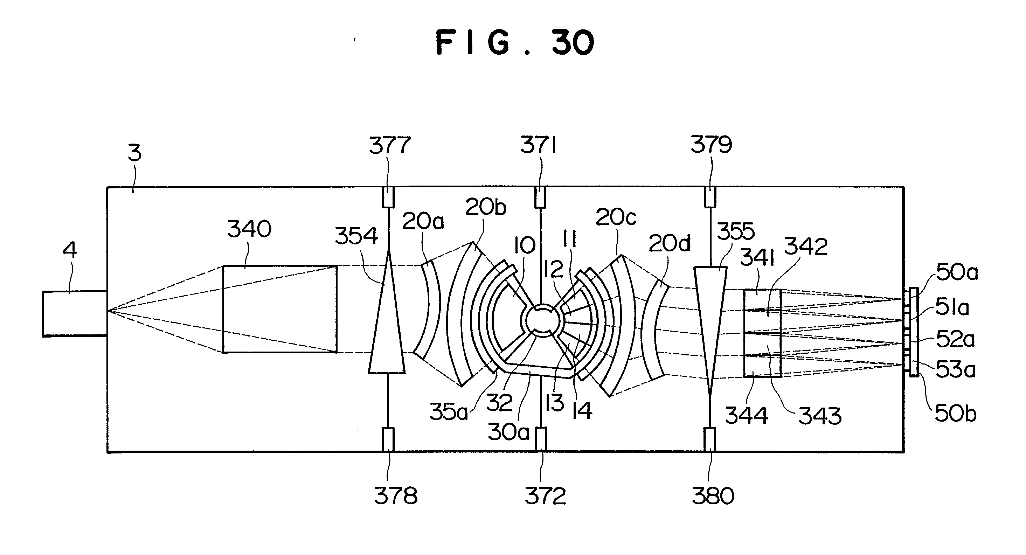

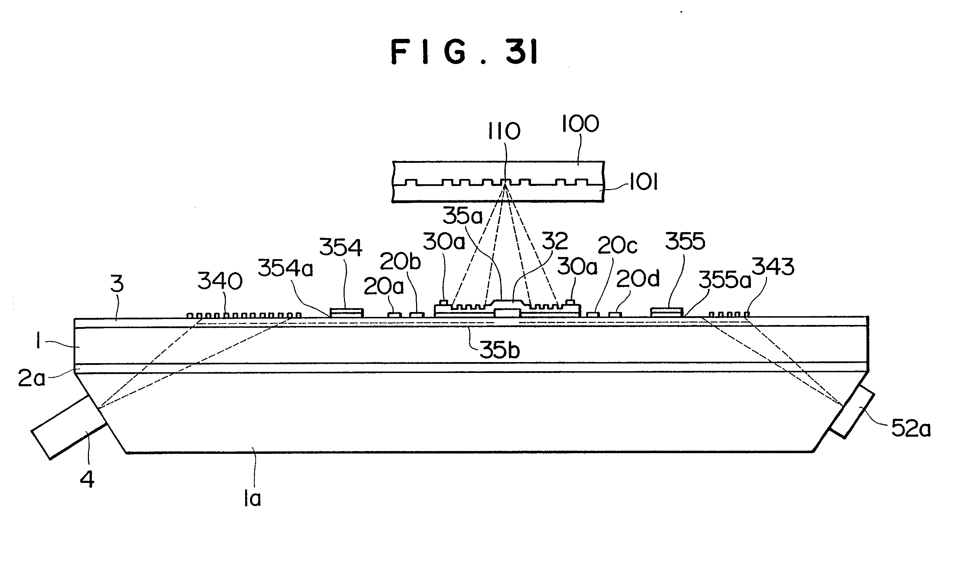

Now, a further embodiment of the optical head according to the present invention will be explained with reference to Figs. 30 and 31. A top plan view of such an embodiment is shown in Fig. 30, and a cross sectional view thereof in Fig. 31.

In Figs. 30 and 31, the light emitted from a semiconductor laser 4 enters by way of a diagonally-cut portion of the substrate 1a and is irradiated on a diffraction grating 340. This diffraction grating 340 is for converting the light outside of the waveguide into the light within the waveguide (guided light) by diffraction. (This conversion between the light outside and inside the waveguide is called the "coupling").

The light transformed into the guided light by the operation of the diffraction grating 340 is deflected in a deflector by the electro-optic effect. The deflector having such a electro-optic effect is comprised of an electrode 354 and an electrode 2a. An electric field is generated between the two electrodes, and the equivalent refractive index of the waveguide influenced by the electric field is changed by the electro-optic effect. In this embodiment, the electrodes 54 and 2a are formed in prism under the effect of the electric field. As a result, the deflection angle at the prism part is changed by the voltage applied to the electrodes, thereby changing the deflection angle of the guided light electrically. In this way, if a deflector having an electro-optic effect is used in place of the one with a surface elastic wave, it is possible to do without a high-frequency oscillation circuit required for generating a surface elastic wave. This eliminates the possibility of a radio wave interference which otherwise might be caused by a high-frequency leakage from the optical head. If an electrode 354 is arranged directly on the waveguide surface by use of a translucent and conductive material, on the other hand, the interval between the electrodes 354 and 2a is minimized for a larger deflection angle while minimizing the voltage applied to the electrodes. Also, a buffer layer 354a is inserted between the electrode 354 and the waveguide 3. This arrangement is important especially when a conductive material such aluminum is used for the electrode 354 as the resulting guided light is capable of being efficiently transmitted without being attenuated by the electrode 354.

The voltage to the electrode 354 is supplied through a terminal 378. Further, the electrode 354 may be connected with a terminal 377 which in turn may be connected with a matching resistor or the like. This configuration desirably increases the speed of voltage application.

The electrode 354 is made of a resistive material which enables a current to be supplied through the terminals 377 and 378 in a sufficient amount to generate heat in the electrode 354. The heat generation in the electrode 354 heats the waveguide 3 and the substrate 1, and the guided wave is deflected by the thermo-optic effect. The use of a deflector makes it possible to produce a change in refractive index larger than by the electro-optic effect, leading to a larger deflection angle.

The light deflected by the electro-optic effect (or thermo-optic effect) enters the waveguide lenses 20a and 20b. The effect obtained in these lenses is similar to that described with reference to Figs. 28 and 29. After being deflected in such a manner as to form a focal point within the waveguide surface by the operation of the waveguide lenses 20a and 20b, the guided light is emitted outside of the waveguide surface by the operation of the diffraction grating 10.

The light diffracted in the diffraction grating 10 is condensed at the focal point 110 on the optical data medium 100 disposed in contact with or in proximity to the protective film 101. In order to write data in the optical data medium, the light intensity of the semiconductor laser 4 or the external magnetic field assigned to the focal point is modulated in the process of irradiation of light. Also, for reading the optical data optically from the optical data medium, the light reflected from the optical data medium is received and processed appropriately.

The light reflected from the optical data medium 100 is transformed into the light propagated in each waveguide by the operation of the diffraction gratings 11, 12, 13, 14. The light thus transformed into the guided light by each diffraction grating becomes substantially parallel to each other through the waveguide lenses 20c and 20d.

The light thus transformed into substantially parallel form by the waveguide lenses 20c and 20d are deflected by a deflector having an electro-optic or thermo-optic effect in the manner similar to above. This deflector is comprised of an electrode 355. In the case of using the electro-optic effect, a voltage is required to be applied between the electrode 355 and the electrode 2a. If the thermo-optic effect is utilized, on the other hand, a resistor is used as the electrode 355 and a control voltage is applied through the terminals 379 and 380. The buffer layer 355a has the same object as 354a mentioned above. This deflector is inserted for the same purpose as that of the SAW transducers 352, 353 described with reference to Figs. 28 and 29 and may be done without.

The light deflected by the electro-optic or thermo-optic effect (or the light transformed into guided light by the diffraction gratings 11 to 14 if the deflector is lacking) is produced outside of the waveguide by the operation of the diffraction gratings 341, 342, 343, 344, and transformed into electrical signals through the optical detectors 51a, 52a, 53a. In the same manner as mentioned above, a read signal, a track error signal and a focus error signal are calculated.

The light quantity emitted from the semiconductor laser may be detected by an optical detector, and by use of the detected quantity, the read signal, track error signal and the focus error signal mentioned above may be normalized. In that case, a signal not depending on the quantity of light from the semiconductor laser providing a light source is obtained, thereby desirably stabilizing the operation.

An external control section (the control section 600 shown in Fig. 13, for example) is adapted to supply a voltage commensurate with the track displacement to the required parts of the electrodes 354 and 355. As a result, the optical point 110 is moved along the tracking direction of the optical data medium 100 thereby to correct the tracking displacement. In this way, a fine tracking mechnism free of machnically moving parts is realized. By use of a focus error signal, on the other hand, an electric focusing control system is realized without mechanically moving parts by an operation similar to that mentioned above.

The diffraction gratings 10 to 14 are formed with slits in the surface of the translucent material 35a. In this case, the translucent material 35a has dual functions of an electrode and a diffraction grating at the same time. As compared with the case where an electrode and a diffraction grating are separately constructed, the configuration is simplified for facilitating the production processes. If the conductivity of the translucent material 35a increases to such an extent as to absorb the guided light, it is possible to insert a buffer layer between the waveguide and the translucent material 35a to minimize the transmission loss of the guided light.

According to the present embodiment, the focusing and tracking operations are optically performed without mechanically moving parts, thereby improving the operating speed, transfer speed (as the result of the possibility of improving the rotational speed of the optical data medium by high-speed tracking), the reliability for lack of mechanically moving parts, as well as productivity, while at the same time shortening the access time due to a reduced weight of the optical head with a smaller size and thickness thereof.

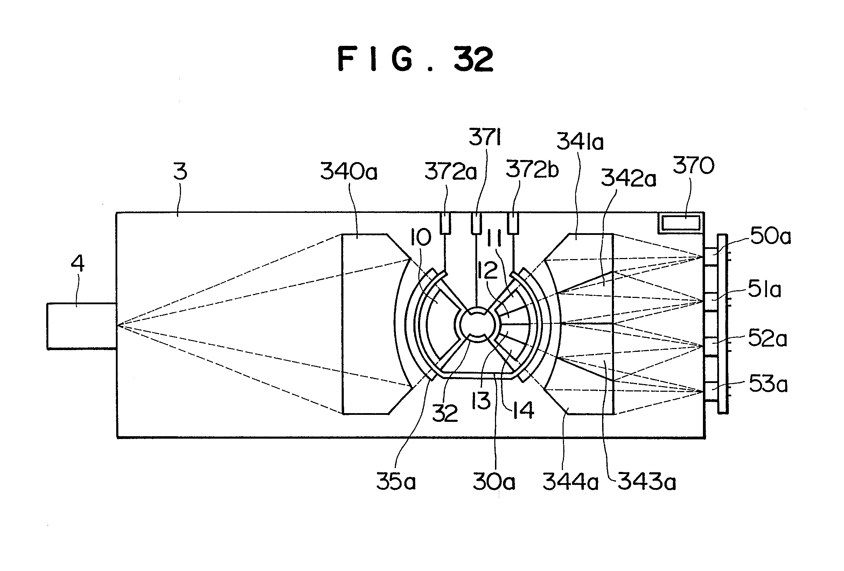

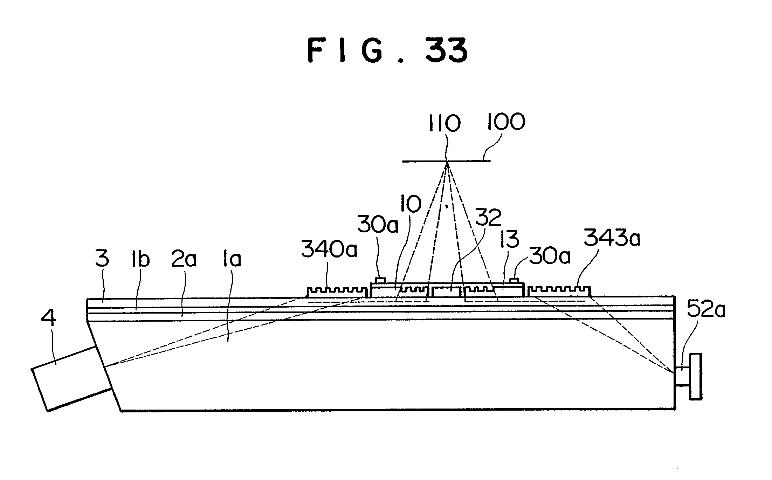

Now, still another embodiment of the optical head according to the present invention will be described with reference to Figs. 32 and 33. A top plan view of the embodiment is shown in Fig. 32, and a cross sectional view thereof in Fig. 33.

In Figs. 32 and 33, the light emitted from the semiconductor laser 4 enters a diagonally-cut portion of the substrate 1a and irradiates a diffraction grating 340a. This diffraction grating 340a is for converting the light outside of the waveguide (out-waveguide light) into the light within the waveguide (guided light) by the diffractive operation of the diffraction grating 340a. The guided light is designed to form a focal point at a specific point on the waveguide 3.

The light thus converted into a guided light by the operation of the diffraction grating 340a is diffracted by the diffraction grating 10 and condensed at a focal point 110 on the optical data medium 100. A data is written in the optical data medium 100 by modulating the light intensity of the semiconductor laser 4, or by modulating the magnetic field applied to a given portion while being irradiated with the light. The optical data is read, on the other hand, from the optical data medium 100 by receiving the reflected light from the optical data medium 100 and processing it appropriately.

The light reflected on the optical data medium 100 is transformed into the light transmitted through each waveguide by the operation of the diffraction gratings 11, 12, 13, 14. This light is emitted outside of the waveguide by the operation of the diffraction gratings 341a, 342a, 343a, 344a and transformed into electrical signals through the optical detectors 50a, 51a, 52a, 53a. In a manner similar to the process mentioned above, a read signal, a track error signal and a focus error signal are calculated.

By use of the focus error signal, an electrical focusing is realized without any mechanically moving parts by the operation similar to that mentioned above.

The track error signal is used, on the other hand, to drive a fine mechnical actuator not shown for applying the force to displace the substrate 1a along the track commensurate with the track displacement.

The diffraction gratings 10 to 14 are formed by slits in the buffer layer inserted between the translucent material 35a and the waveguide 3. The light absorption at the translucent material 35a is thus minimized and at the same time the buffer layer is given the function as a diffraction grating.

According to this embodiment, the diffraction gratings 340a to 344a are equipped also with the function of the waveguide lenses 20a to 20d in Figs. 28 to 31 at the same time, thereby simplifying the system configuration.

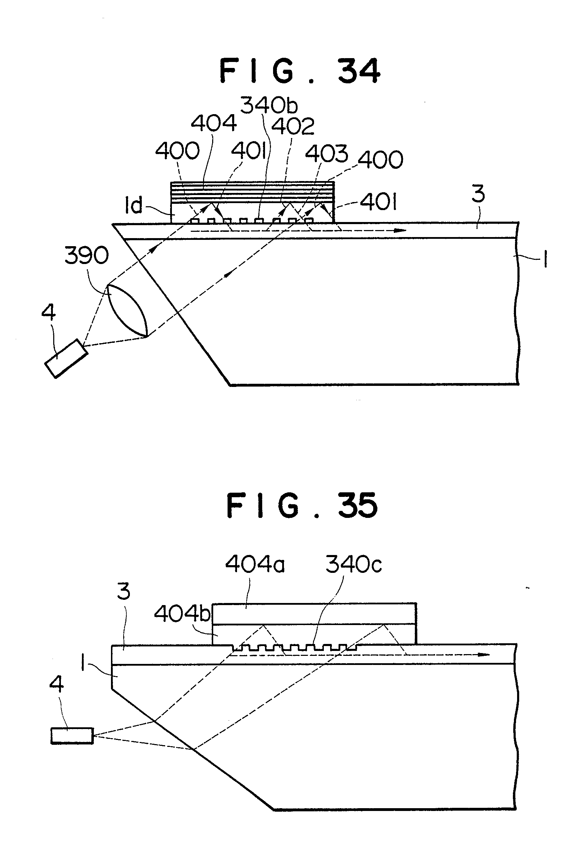

Now, still another embodiment of the optical head according to the present invention will be explained with reference to Fig. 34, which shows a partial cross sectional view of the embodiment.

In Fig. 34, the light emitted from the semiconductor laser 4 is transmformed into parallel light by means of a lens 390. This light becomes the light propagating through the waveguide 3 through the diffraction grating 340b. The coupling efficiency between the light outside of the waveguide and the light within the waveguide is preferably high to assure effective use thereof. This coupling efficiency might be deteriorated when part of the light outside of the waveguide is passed through the diffraction grating 340b and transformed into the light 440 or when the light converted into the guided light becomes the light 402 outside of the waveguide through the diffraction grating 340b. In order to prevent this inconvenience, a reflection film 404 is provided on the side of the diffraction grating 340b far from the side thereof entered by the light outside of the waveguide. The light 400 passed through the diffraction grating 340b is reflected on the reflection film 404 and the resulting light 401 becoms the guided light through the diffraction grating 340b. The out-waveguide light 402 converted from the guided light is reflected also as the light 403 and transformed into the guided light again through the diffraction grating 340b. This process of operation enables the light not coupled with the guided light to be coupled effectively with the guided light thereby to improve the coupling efficiency. The reflection film 404 may be made of any material as long as the light of a wavelength of the light source used is reflected effectively, and this embodiment uses a multilayered film each layer including a thin film of at least two materials different in refractive index. Such thin films are laid over each other in multiple layers. This film is used for deflecting the light by use of Bragg diffraction and is capable of a high coupling efficiency of the diffraction grating 340b with a high reflection efficiency. The use of a multilayered film also facilitates the production processes suited to mass production in planar process.

A buffer layer 1d is interposed between the reflection film 404 and the waveguide layer 3 in order to adjust the thickness of the buffer layer and thereby to secure the phase matching between the guided light transmitted through the waveguide and the guided light converted from the light at the diffraction grating 340b after being reflected from the reflection film 380.

According to the present embodiment, the light emitted from the semiconductor laser 4 is efficiently converted into the guided light.

Now, a still further embodiment of the optical head according to the present invention will be explained with reference to Fig. 35, showing a partial cross sectional view of the embodiment.

In Fig. 35, the light emitted from the semiconductor laser 4 is deflected by a diagonally-cut cut plane in the substrate 1 and is converted into the guided light by the diffraction grating 340c. The diagonal-cut of the substrate 1 realizes the same effect as the prism 1b shown in Fig. 29.

In order to improve the coupling efficiency of the light outside of the waveguide and that within the waveguide, a reflection surface is formed on the side of the diffraction grating 340c far from the side thereof entered by the out-waveguide light. The reflection surface reflects the light passed through the diffraction grating 340b, and converts the light into the guided light through the diffraction grating 340b. The light converted into the out-waveguide light from the guided light is also reflected and reconverted into the guided light through the diffraction grating 340b.

The reflection surface utilizes the total reflection at the boundary between the films 404a and 404b. Specifically, the film 404a is made of a material lower in refractive index than the film 404b, thus forming a reflection surface simple in construction and high in reflectance. The film 404a may be made of a metal, and may be fabricated in the same process as electrodes and terminals which may be made of a dielectric material.

The thickness of the film 404b is adjusted in the same manner as the buffer layer 1d in Fig. 34 to secure phase matching with the guided light converted from the reflected light. By doing so, the improvement of the coupling efficiency is maximized for an improved light utilization rate.

According to the present embodiment, the light emitted from the semiconductor laser 4 is efficiently converted into the guided light.

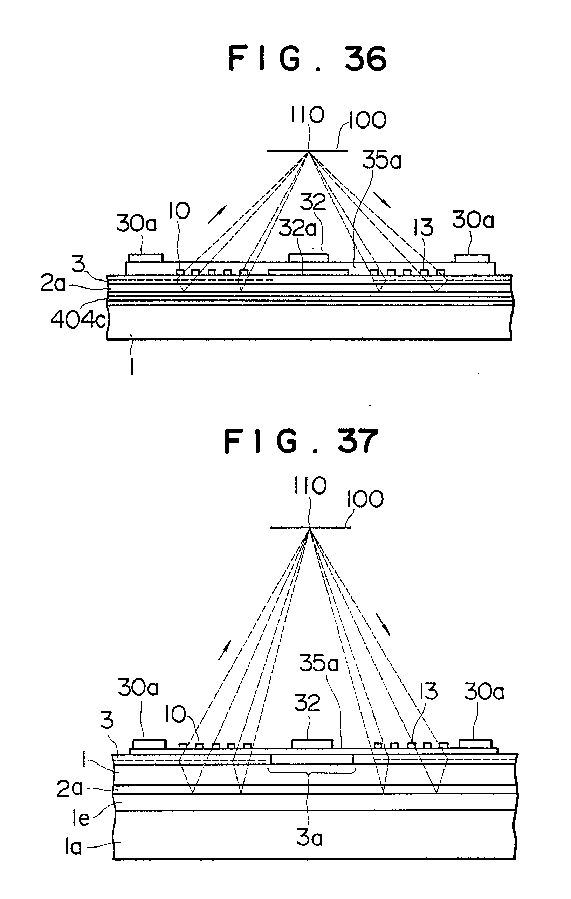

Now, a still further embodiment of the optical head according to the present invention will be explained with reference to Fig. 36, showing a partial cross sectional view of the embodiment. Specifically, this diagram shows a part of Figs. 28 to 33 corresponding to the diffraction gratings 10 and 13.

The light propagated through the waveguide 3 is converted into an out-waveguide light by the operation of the diffraction grating 10 and forms a focal point 110 on the optical data medium 100. The light reflected from the optical data medium 100 is reconverted into the guided light by the operation of the diffraction grating 13. In order to electrically change the focal length, electrodes 30a, 32, a translucent material 35a and an electrode 2a are provided to apply an electric field to the waveguide 3. The operation for changing the focal length was described above.

The electrode 2a may be disposed in contact with the waveguide 3. In this case, the distance between the electrode 2a and the translucent material 35a is shortened, thus generating an effective electric field with a low applied voltage.

In place of the structure shown in Figs. 28 to 33 where the electrode 32 is disposed in contact with the waveguide 3 in order to absorb the unrequired light, a buffer layer may alternatively be interposed between the electrode 32 and the waveguide 3. In this embodiment, apart from the electorde 32, a dielectric member 32a for absorbing the unnecessary light is arranged in proximity to the above-mentioned specific point. This arrangement permits an optimum design of the electrode without taking into consideration an optimum style for absorption of the unrequired light on the hand or a design of the dielectric member 32a to an optimum shape for absorbing the unrequired light on the other.

For appropriate means for improving the coupling efficiency in emitting the light from the diffraction grating or converting into the guided light at the diffraction grating 13, refer to "Focusing Grating for Optical Disk Pickup" by Shogo Ura, et al., Electric Communications Society Journal, Vol. J68-C, No. 10, October 1985. The means disclosed in this paper is such that the light emitted from a diffraction grating 10 toward a substrate is reflected on the boundary between a buffer layer and a silicon substrate to improve the coupling efficiency of the diffraction grating. In Fig. 36, the light reflected toward the substrate is reflected by a reflection layer 404c made of a multilayered film of a dielectric material provided on the substrate side. A reflectance higher than that of the boundary between glass and metal is realized by use of the reflection layer 404c.

According to this embodiment, the coupling efficiency between the guided light and the out-waveguide light is improved, thus assuring effective utilization of the light.

Now, explanation will be made about a still further embodiment of the optical head according to the present invention. Fig. 37 shows a partial cross sectional view of the same embodiment, that is, the part of the configuration shown in Figs. 28 to 33 corresponding to the diffraction gratings 10 and 13.

The light transmitted through the waveguide 3 is converted into an out-waveguide light by the diffraction grating 10, and forms a focal point 110 on the optical data medium 100. The light reflected from the optical data medium 100 is reconverted into the guided light by the operation of the diffraction grating 13. In order to change the focal length electrically, electrodes 30a, 32, translucent material 35a and an electrode 2a are provided to apply an electric field to the waveguide 3 and the substrate 1. The operation of changing the focal length was described above.

Instead of disposing the electrode 32 in contact with the waveguide 3 for absorbing the unrequired light in the configuration from Figs. 28 to 33, the embodiment under consideration includes a slit 3a at a part of the waveguide to remove the unrequired light by deflection. This arrangement eliminates the problem of absorption failure of the unrequired light or the like and improves the optical performance further.

In order to improve the coupling efficiency in emitting the light at the diffraction grating and converting into the guided light at the diffraction grating 13, the light emitted from the diffraction grating 10 toward the substrate is subjected to total reflection at the boundary between the electrode 2a of a translucent material and the substrate 1e. Generally, the total reflection is accompanied by a very high reflectance and secures a higher light utilization rate. The substrate 1e may be integrated with the substrate 1a, and the substrate 1e and the substrate 1a with the electrode 2a.

The boundary for total reflection may be either between the substrate 1 and the electrode 2a, between the electrode 2a and the substrate 1e or between the substrate 1e and the substrate 1a selected as required.

The embodiment under consideration improves the coupling efficiency between the guided light and out-waveguide light for an improved light utilization rate.

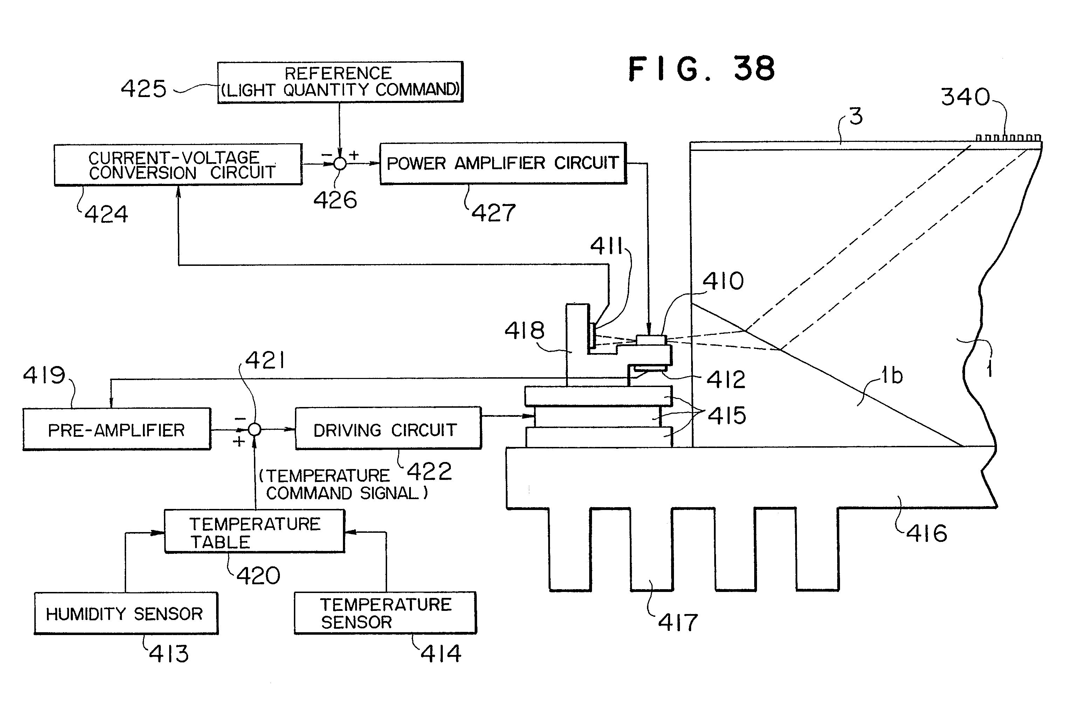

Now, still another embodiment of the optical head according to the present invention will be explained with reference to Fig. 38, showing a side view of the embodiment and a block diagram of the electrical system thereof.

The light emitted from a semiconductor laser chip 410 is deflected by the operation of a prism 1b, after which it is converted into a guided light by the operation of a diffraction grating 340 disposed in the waveguide 3 on the substrate 1. The quantity of the light emitted from the semiconductor laser chip 410 is monitored by an optical detector 411. The light quantity monitored by the optical detector 411 is converted into a voltage signal at a current-voltage converter circuit 424 and is compared with a light quantity command from a reference signal setter 425. The resultant difference is determined by an adder 426 and applied to an amplifier 427. The output of the amplifier 427 is used to control the semiconductor laser chip 410 thereby to reduce the variations in light quantity at the semiconductor laser chip 410. The semiconductor laser chip 410 is mounted on a holder 418, which in turn is disposed on a temperature controller 415. This temperature controller 415 includes a heater or a Peltier device or the like cooler/heater. The holder 418 has mounted thereon a temperature detector 412 in the vicinity of the semiconductor laser chip 410. A pre-amplifier 419 converts a signal from the temperature detector 412 into a temperature signal.

The temperature and humidity of the ambience in which the semiconductor laser chip is disposed are sensed by a temperature sensor 414 and a humidity sensor 413. Signals from these sensors are used to calculate the dewing temperature in the particular ambience from a temperature table 420, thus producing this dewing temperature plus a predetermined margin temperature. The temperature thus produced provides a temperature command to be followed by the temperature controller 415. The difference between the present temperature of a holder 418 produced from a pre-amplifier 419 and the temperature command is calculated by an adder 421, and the result of calculation is applied to a driving circuit 422 for energizing the temperature controller 415. As a result, the temperature of the holder 418 is capable of being reduced to the limit of the dewing temperature. The holder 418 and the semiconductor laser chip 410 are considered almost at the same temperature, and therefore it is possible to reduce the temperature of the semiconductor laser chip 410 to a practicable limit.

The margin temperature is a temperature allowance for control, and is based on the fact if the semiconductor laser chip 410 is set to a level very close to the dewing temperature, the dewing might be easily triggered by some factor. This margin temperature is determined in consideration of the holder construction, temperature setting error, etc.

Fins 417 are formed on a support member 416 carrying the temperature controller 415. When the holder 418 is cooled by the temperature controller 415, heat is released from the fins. While heating the holder 418, on the other hand, this configuration enables heat to be taken in by way of the fins 417. This arrangment also smooths the heat exchange for an improved temperature control efficiency.

The aforementioned construction permits the semiconductor laser chip 410 to be always set to an ideally low temperature and the service life of the semiconductor laser chip 410 is lengthened for an improved reliability.

In the above-mentioned embodiment, the humidity sensor 413 may be done without. In that case, the temperature detected by the temperature sensor 414 plus a margin temperature is used as a temperature command to be followed by the temperature controller 415. Both the humdiity sensor 413 and the temperature sensor may be eliminated at the same time. In that case, in order that the temperature command to be followed by the temperature controller 415 may not decrease below the ambient temperature to cause the dewing, the temperature command is set to the highest level that can be taken by the ambient temperature during actual operation plus a margin temperature.

A dew sensor may be mounted on the holder 418. In that case, the temperature is regulated to an optimum level while the dew sensor is detecting whether dew is being formed or not.

In Fig. 38, the temperature controller 415 controls the temperature of only the holder 418. Instead, the temperature controller 415 carrying the holder 418 and the substrate 1 or other optical system components at the same time may be used to control the optical system including the substrate 1. As another alternative, a temperature controller separate from the temperature controller 415 may be provided to carry the optical system thereon. In the latter case, the temperature of the optical system is optimized and the optical characteristics improved and maintained.

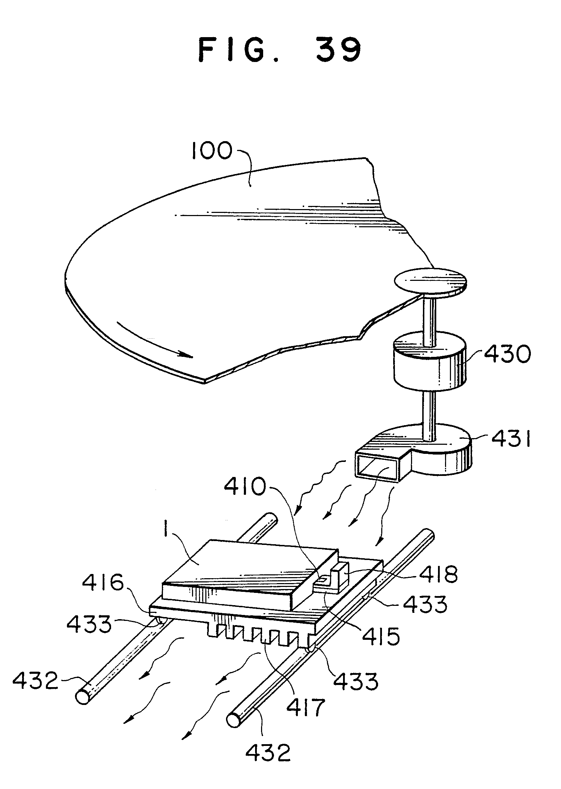

Now, still anothr embodiment of the present invention will be explained with reference to Fig. 39, which is a perspective view of the same embodiment.

In Fig. 39, a substrate 1 carrying an optical system and a temperature controller 415 are placed on a support member 416. The temperature controller 415 in turn has mounted thereon a holder 418 carrying a semiconductor laser chip 410.

The support member 416 includes a linearly movable mechanism 433 supported on rails 432 arranged along the direction of tracking of the optical data medium 100. The support member 416 is driven by an actuator like a linear motor not shown for seeking and such rough feed as tracking.

The optical data medium 100 is driven rotationally by a motor 430. With the turning effort of this motor 430 as a driving power, a fan 431 is operated. The wind from the fan 431 is supplied to the fins 417 formed on the support member 416.

This configuration enables the heat generated from the temperature controller 415 for cooling the semiconductor laser chip 410 to be forcibly dampened through the fins 417, thereby effectively cooling the semiconductor laser chip 410. The heat may also be effectively absorbed as desired from the fins such as when the semiconductor laser chip 410 is heated by the temperature controller 415.

Fins may be appropriately formed not only on the support member 416 but also on the holder 418, the temperature controller 415, etc. in order to improve the heat exchange efficiency. Also, an uneven part like the one on a diffraction grating may be formed at such a given part of the substrate 1 or the surface thereof inside of the waveguide not shown where the light necessary for signal detection is not propagated, thus promoting the heat exchange under the wind received from the fan 431. By doing so, the heat exchangeability is improved to facilitate an efficient temperature control of the semiconductor laser chip 410. Further, the power source for the fan may be derived from a motor other than the motor 430.

According to the present embodiment, the temperature control of the semiconductor laser chip 410 is effected efficiently for an improved reliability.

The present invention, which is constructed as mentioned above, has the effects described below.

The optical configuration in rotational symmetry reduces the amount of aberration in the direction out of axis. As a result, the aberration is decreased for an improved light utilization rate, thereby realizing an optical system having a stable optical performance.

In view of the fact there is no beam splitter or a retarder in the optical path leading to the optical detector from the light source, the unnecessary attenuation of the light is minimized and the signal intensity improved, thereby leading to an improved signal read accuracy.

Further, a guided light absorption unit arranged at parts of the system for absorbing the guided light enables the light leakage at the emitting diffraction gratings to improve the signal CN ratio for an improved signal read accuracy.

Furthermore, by optimizing the direction of oscillation of the electric field of the light in the vicinity of the focal point, the crosstalks between adjacent tracks is prevented, which in turn improves the signal read accuracy.

In addition, the light detection section, the signal processing section, the control voltage generation section, the control signal transmission section and the light control section may be integrated in monolithic way or by hybrid configuration to realize a reliable, compact optical head.

What is more, an optimum control voltage distribution is produced at a given point to optimize the distribution of the control voltage applied with a changeable focal length.

Furthermore, a waveguide-type lens for condensing the light transmitted through the waveguide and a diffraction grating progressively narrowed along the direction of advance of the light permits the intensity of the light emitted from the diffraction gratings to approach to a uniform value at each part of the diffraction gratings, resulting in a large effective NA of the diffraction grating for emitting the light.

## Claims

1. An optical head comprising a planar waveguide (3) for propagating the light emitted from a light source (4), a diffraction grating (10) formed in and concentrically around a specific point of said planar waveguide, at least an optical detector (50, 51, 52, 53) for receiving selected one of the reflected light and the transmitted light from a light-receiving medium (100) diffracted by the diffraction grating, and a signal processing circuit (70) for processing an output signal from said optical detector.

2. An optical head according to Claim 1, wherein said light-receiving medium is an optical data medium (100) for selected one of storing and recording digital data.

3. An optical head comprising a light source (4) for producing the light, a planar waveguide (3) for guiding said light, an irradiation-side diffraction grating (10) for irradiating the guided light on an external medium and at least a light-receiving-side diffraction grating (11, 12, 13, 14) for receiving the light reflected from said medium and leading said ight to the waveguide, said diffraction gratings being generally concentrically arranged on the waveguide, and at least an optical detector (50, 51, 52, 53) for detecting the light received by the light-receiving-side diffraction grating.

4. An optical head according to Claim 3, wherein said light source, said waveguide, said irradiation-side and light-receiving-side diffraction gratings, and said optical detector are arranged integrally with each other on a substrate (2).

5. An optical head according to Claim 3, further comprising a processing circuit (70) for processing a signal from said optical detector.

6. An optical head according to Claim 3, further comprising voltage application means (7) for supplying a given voltage to each of the irradiation-side and light-receiving-side diffraction gratings arranged concentrically.

7. An optical head according to Claim 6, further comprising computation section (71) for controlling said voltage application means for recognizing the displacement of the focal point of the light irradiated on the medium and correcting said displacement from the conditions of the signal produced from said optical detector.

8. An optical head comprising a planar waveguide (3) on substrate (2), a semicondutor laser (4) arranged at an end of the waveguide, a first lens (20) placed midway of the waveguide for condensing the light from the semiconductor laser at a specific point, a diffraction grating (10) arranged concentrically around said specific point on said waveguide for irradiating the light condensed by said first lens on an external medium (100), at least a diffraction grating (11, 12, 13, 14) arranged concentrically on said waveguide for receiving the reflected light from said medium and leading said received light to said waveguide, and at least an optical detector (50, 51, 52, 53) arranged on the other side of said waveguide for detecting the light led to said waveguide by said light-receiving-side diffraction grating.

9. An optical head according to Claim 8, further comprising a signal processing section (70) at the other end of said substrate nearer to said waveguide for processing the signal detected by said optical detector.

10. An optical head according to Claim 9, further comprising voltage application means (72) for supplying a voltage to said irradiation-side diffraction grating and said light-receiving-side diffraction grating.

11. An optical head comprising a light source (4), a planar waveguide (3) for propagating the light emitted from said light source, a diffraction grating (10) arranged in contact with said planar waveguide, at least an optical detector (50, 51, 52, 53) for receiving selected one of the reflected light and the transmitted light from an optical data medium (100), and a signal processing circuit (70) for processing an electrical output signal from said optical detector, wherein said diffraction grating is formed concentrically around a specific point on said planar waveguide.

12. An optical head according to Claim 11, wherein said specific point is selected in such a manner as to be shortest in optical distance from the focal point on said planar waveguide and said optical data medium coincides substantially with the specific point.

13. An optical head according to Claim 11, further comprising a waveguide-type lens for condensing the light emitted from said light source, wherein said waveguide-type lens is arranged in such a manner that a focal point formed within said waveguide by said waveguide-type lens coincides with the specific point.

14. An optical head according to Claim 11, further comprising a diffraction grating (10) for emitting a guided light and a plurality of diffraction gratings (11, 12, 13, 14) for introducing the light out of the waveguide as a guided light on said planar waveguide, each of said diffraction gratings being formed in rotational symmetry with respect to said specific point.

15. An optical head according to Claim 11, wherein guided light absorption means (32) for absorbing the guided light is arranged selected one of in a range including said specific point, in contact with said planar waveguide, within said planar waveguide and in the vicinity of said planar waveguide.

16. An optical head according to Claim 11, wherein the pitches of the diffraction grating on the opposite sides of said specific point are displaced by half pitch.

17. An optical head comprising a light source (4), a planar waveguide (3) for leading the light from the light source, a diffraction grating (10) arranged in contact with said planar waveguide, and at least an optical detector (50-53, 223-226, 50a-53a) for receiving the light reflected from an optical data medium (100), wherein the optical substrate (1) having said planar waveguide is arranged in contact with an electrical substrate (2) for forming an electrical circuit like silicon, the light diffraction grating is arranged in contact with said waveguide, the light emitted from said waveguide is led to at least an optical detector arranged in contact with said electrical substrate, a signal processing circuit (70) is arranged on said electrical substrate, and an output of said signal processing circuit is transmitted by a conductive wire arranged in contact with said optical substrate.

18. An optical head according to Claim 17, further comprising a resistive conductive material (35, 36, 227, 35a) having a finite resistance value in contact with said planar waveguide and a plurality of conductive wires (30-32, 228, 229, 30a) arranged in contact with said resistive conductive material for applying a control voltage.

19. An optical head according to Claim 18, further comprising at least one voltage generation means for supplying the plurality of conductive wires.

20. An optical head according to Claim 17, further comprising at least a waveguide-type lens (194, 196, 198, 200; 209, 211, 213, 215) for condensing the light propagated through said waveguide and a diffraction grating (10, 201, 202, 203, 204) progressively narrowed along the direction of advance of the light on said planar waveguide.

21. An optical head according to Claim 17, comprising a plurality of diffraction gratings (11-14, 205-208) of different focal lengths provided on said planar waveguide, and a plurality of optical detectors (50-53, 50a-53a, 223-226) for detecting each of the quantities of the light converted into a guided light by each of said diffraction gratings.

22. An optical head according to Claim 17, further comprising at least a three-dimensional waveguide (180, 182, 183, 186 to 189) in a part of said planar waveguide, and an emitting diffraction grating for leading the light to said optical detector.

23. An optical head comprising an optical pick-up for an optical data medium (100) formed on a substrate (1), said optical pick-up being arranged in a hollow case, a transparent window (Fig. 12) in the wavelength band of a light source (4) in at least the part of said case where light enters and leaves, and a plurality of terminals (165) partially connected to the interior of said case and arranged outside of said case.

24. An optical head comprising a light source (4), a planar waveguide (3) for propagating the light emitted from the light source, and a diffraction grating (10, 201-204) for emitting out of the planar waveguide the light propagated through the planar waveguide, wherein said diffraction grating is formed concentrically around a specific point at a given position on said planar waveguide, and electrodes (350, 351) are formed at the ends of said planar waveguide in order to generate a surface elastic wave in the planar waveguide.

25. An optical head according to Claim 24, further comprising a heater (354, 355) arranged selected one of on and in the vicinity of the planar waveguide for changing the temperature of the planar waveguide.

26. An optical head according to Claim 24, further comprising a dielectric member (32a) formed in a region including the specific point selected one of on and in the vicinity of the planar waveguide.

27. An optical head according to Claim 24, further comprising at least a slit (3a) formed in the region including said specific point selected one of on and in the vicinity of the planar waveguide.

28. An optical head according to Claim 23, further comprising a focusing grating coupler (10, 201-204) having a focal point at selected one of said specific point and both said specific point and the emitting point of the light from said light source.

29. An optical head comprising a light source (4), a planar waveguide (3) for propagating the light emitted from the light source, a diffraction grating (10) for condensing and emitting out of the planar waveguide the light propagating through said planar waveguide, and a plurality of selected one of positive waveguide lenses for condensing the guided light and negative waveguide lenses for dispersing the guided light, said waveguide lenses making up a waveguide lens group generally having selected one of positive and negative lens function.

30. An optical head according to Claim 29, comprising a waveguide lens group including at least one each of the positive waveguide lens and the negtive waveguide lens.

31. An optical head according to Claim 29, wherein selected one of the forward and rear focal point of the waveguide lens group coincides with a specific point on the waveguide surface.

32. An optical head comprising a light source (4), a planar waveguide (3) for propagating the light emitted from the light source, and a conductive film of a transparent material (35, 36, 227, 359) arranged selected one of on and in the vicinity of the waveguide surface for passing the light at least in the light wavelength band used.

33. An optical head according to Claim 32, wherein at least a slit is formed in the film of a conductive transparent material providing a diffraction grating.

34. An opticl head according to Claim 32, wherein a diffraction gating is formed on the film of a conductive transparent material.

35. An optical head according to Claim 32, wherein a film of a non-dielectric material is formed between said film of a conductive transparent material and said waveguide.

36. An optical head comprising a light source (4), a planar waveguide (3) for propagating the light emitted from said light source, and a diffraction grating (10, 340b, 340c) arranged selected one of on and in the vicinity of said planar waveguide, wherein a reflection surface is formed in the vicinity of the diffraction grating.

37. An optical head according to Claim 36, wherein said reflection surface is a diffraction grating.

38. An optical head according to Claim 36, wherein said reflection surface is a boundary of different types of media having different refractive indexes.

39. An optical head comprising a light source (4), a planar waveguide (3), a temperature sensor (412) arranged in the vicinity of the light source for measuring the temperature of the light source, a temperature controller (415) for regulating the temperature of the light source, and temperature control means (415) for controlling the temperature controller in such a manner that the output of said temperature sensor coincides with a temperature command.

40. An optical head according to Claim 39, wherein said temperature command is set higher than the ambient temperature.

41. An optical head according to Claim 39, further comprising a plurality of radiation fins in the vicinity of selected one of the light source and the temperature controller.

42. An optical head comprising a light source (4), an optical system elements (3, 10, 340) for irradiating the light emitted from said light source on an optical data medium (100) and a plruality of radiation fins (417).

43. An optical head according to Claim 42, further comprising a fan (431) mounted on a motor (430) for rotating the optical data medium.

44. An optical data processing apparatus comprising an optical disk (100) for storing data in an optically readable fashion, a motor (430, 173) for rotationally driving the optical disk, an optical head according to any of Claims 1 to 43 for irradiating the light on said optical disk and retrieving the data by receiving the light reflected therefrom, an optical head driving mechanism (162, 172, 285, 287) for driving said optical head to track position of the optical disk as commanded, and a control section (70, 650, 600) for driving the motor in response to an external command, controlling the position of the optical head driving mechanism and producing out the data retrieved by the optical head.

# F I G . 1

EP 0 360 209 A2

# FIG. 2

EP 0 360 209 A2

# FIG. 3

# FIG. 4

EP 0 360 209 A2

# F I G . 5

# F I G . 6

FIG. 7

FIG. 8

LIGHT COUPLING EFFICIENCY

157  155  156

Z

$F_2$     F     $F_1$     DISK POSITION ($f'$)

FIG. 9

FOCUS ERROR OUTPUT

$F_2$     F     $F_1$

DISK POSITION

158

FIG. 10

EP 0 360 209 A2

# F I G. II

# F I G . 12

WRITE SIGNAL INPUT PIN

POSITIVE POWER PIN

GROUNDING (EARTH) PIN

TRACKING ERROR SIGNAL OUTPUT PIN

READ SIGNAL OUTPUT PIN

ACTUATOR DRIVING PIN

TRANSPARENT WINDOW

ACTUATOR DRIVING PIN

NC

NEGATIVE POWER PIN

PIN FOR EXTERNAL PART

PIN FOR EXTERNAL PART

FOCUS ERROR OUTPUT PIN

FIG. 13A

FIG. 13

FIG. 13A

FIG. 13B

100

175 COIL

500

163 164

165 171

178

233

176 177

170 171

173

ACTUATOR DRIVING SIGNAL

172

680 CON-NECTOR

(※A)>

POSITION SIGNAL

630

SPEED SIGNAL

640

MOTOR CONTROL CIRCUIT

ROTATIONAL SPEED COMMAND SIGNAL

EP 0 360 209 A2

EP 0 360 209 A2

# FIG. 13B

Block diagram showing SPEED TABLE (651), PHASE COMPENSATION (652, 654, 657), LOW-PASS FILTER (653), AMP (656, 658), switches S1→C (SPEED CONTROL), S2→C (POSITION CONTROL), S3→C (DOUBLE SERVO) (CONTROLLED 1 TO 2 TO 3), SYSTEM CONTROLLER (MICROCOMPUTER) (630), INTERFACE (620), POWER SUPPLY (610), ENCODER (670), DECODER (660), with signals TRACK JUMP SIGNAL, SWITCHING SIGNAL, TRACK AIR SIGNAL, FINE ACTUATOR DRIVING SIGNAL, POSITION COMMAND SIGNAL, WRITE SIGNAL, READ SIGNAL, CONTROL SIGNAL, WRITE DATA, CONTROL DATA, READ DATA; labels 600, 650, 655, 661, 662, 663, FROM 176, TO EACH ELECTRICAL CIRCUIT, TO 680 (※A).

**FIG. 14**

FIG. 15

EP 0 360 209 A2

# F I G . 16

# F I G . 17

EP 0 360 209 A2

# F I G . 18

LIGHT INTENCITY IN
VICINITY OF FOCAL POINT

SIZE OF FOCAL SPOT

# F I G . 19

DIRECTION OF
ELECTRIC FIELD

DIRECTION OF
ELECTRIC FIELD

DIRECTION OF
LIGHT PROPAGATION

DIRECTION OF
LIGHT PROPAGATION

# F I G . 20

LIGHT INTENCITY IN
VICINITY OF FOCAL POINT

SIZE OF FOCAL SPOT

# F I G . 21

Z

SECOND GROUP ⟵ ⟶ FIRST GROUP

b4  a4
b3  a3
b2  a2
b1  a1

y

# F I G . 22

332

311

EP 0 360 209 A2

# FIG. 23

# FIG. 24

# FIG. 25

# FIG. 26

EP 0 360 209 A2

# FIG. 27

REGIOR OF
LIGHT EMITTING

# F I G . 28

EP 0 360 209 A2

F I G . 29

EP 0 360 209 A2

# FIG. 30

EP 0 360 209 A2

# F I G . 3 1

EP 0 360 209 A2

# FIG. 32

EP 0 360 209 A2

F I G . 33

# F I G . 34

# F I G . 35

# FIG. 36

# FIG. 37

FIG. 38

EP 0 360 209 A2

# FIG. 39